# EUROPEAN PATENT APPLICATION

(11) **EP 4 811 013 A1**
(43) Date of publication of application: **23.09.2026**
(21) Application number: 24891684.3
(22) Date of filing: 30.10.2024
(51) Int. Cl.: G02B 13/00, G01S 7/481, G02B 9/60, G02B 13/18, G02B 3/02, G03B 9/02, G02B 5/28, G02B 3/00

(54) **RECEIVING OPTICAL SYSTEM, SENSOR SYSTEM, AND LIDAR DEVICE**

(30) Priority: 14.11.2023 KR 20230157197
(71) Applicant: LG Innotek Co., Ltd., Seoul 07796 (KR)
(72) Inventor: LEE, Jae Kang, Seoul 07796 (KR); PARK, Chan Young, Seoul 07796 (KR)
(74) Representative: Plasseraud IP
(86) International application number: PCT/KR2024/016832
(87) International publication number: WO 2025/105737

(57) **Abstract**

An optical system disclosed in an embodiment of the invention includes a first lens closest to an object; a last lens closest to a sensing portion; a plurality of lenses disposed between the first lens and the last lens and aligned with an optical axis; and an optical filter arranged in one of regions between the plurality of lenses, wherein a center distance between two lenses adjacent to an object-side of the optical filter is greater than a center distance between two lenses adjacent to a sensor-side of the optical filter, an optical axis distance from an object-side surface of the first lens to a surface of the sensing portion is TTL, and 1/2 of a diagonal length of the sensing portion is ImgH, and the following equation may satisfy: 10 < TTL/ImgH <30.

## Description

### Technical Field

An embodiment of the invention relates to a receiving optical system and a sensor system having the same. An embodiment of the invention relates to a receiving optical system for LIDAR (Light detection and ranging) and a device having the same. An embodiment of the invention relates to a receiving optical system for LIDAR and a moving object having the system.

### Background Art

ADAS (Advanced driving assistance system) is an advanced driver assistance system that assists the driver in driving. It consists of sensing the situation ahead, judging the situation based on the sensed results, and controlling the vehicle's behavior based on the situation judgment. For example, the ADAS sensor device detects the vehicle ahead and recognizes the lane. Afterwards, when the target lane, target speed, and target ahead are determined, the vehicle's ESC (Electrical stability control), EMS (Engine management system), and MDPS (Motor driven power steering) are controlled. Representative examples of ADAS include automatic parking systems, low-speed city driving assistance systems, and blind spot warning systems.

Recently, as interest in autonomous vehicles has increased, demand for LIDAR (Light detection and ranging) sensors, which are its core components, is increasing. Currently, LIDAR is only used for high-spec, expensive vehicles, but it is expected to be applied to general vehicles as well due to reduced manufacturing costs. Ultra-small and ultra-light LIDAR technology can be used not only as a sensor for unmanned mobile devices, but also in satellites and aerospace for observing the Earth's topography and environment, unmanned vehicles, transporters, cranes, and robots used in factories and shipyards, and is expected to emerge as a complex or cooperative operation between mobile devices through an integrated approach in the land, aviation, and marine industries, and as a result, it is urgent to develop an optical system for ultra-small and ultra-light LIDAR to implement ultra-small and ultra-light LIDAR.

### Disclosure

### Technical Problem

An embodiment provides a receiving optical system having improved optical characteristics and a sensor system having the same. An embodiment provides a wide-angle receiving optical system and a sensor system having the same. An embodiment provides a receiving optical system, a sensor system, and a LIDAR device having improved thermal compensation characteristics.

### Technical Solution

An optical system according to an embodiment of the invention comprises a first lens most adjacent to an object; a last lens most adjacent to a sensing portion; a plurality of lenses disposed between the first lens and the last lens and aligned in an optical axis; and an optical filter disposed in one of regions between the plurality of lenses, wherein a center distance between two lenses adjacent to an object side of the optical filter is greater than a center distance between two lenses adjacent to a sensor side of the optical filter, an optical axis distance from an object-side surface of the first lens to a surface of the sensing portion is TTL, and 1/2 of a diagonal length of the sensing portion is ImgH, and may satisfy the following equation: 10 < TTL / ImgH < 30.

According to an embodiment of the invention, an optical axis distance from a sensor-side surface of the optical filter to the surface of the sensing portion is D1, and an optical axis distance from a sensor-side surface of the last lens to the surface of the sensing portion is BFL, and may satisfy the following equation: 2 < D1 / BFL < 6.

According to an embodiment of the invention, an optical axis distance from a sensor-side surface of the optical filter to a surface of the sensing portion is D1, and an optical axis distance from an object-side surface of the optical filter to an object-side surface of the first lens is D2, and may satisfy the following equation: D1 < D2. According to an embodiment of the invention, a second lens and a third lens are sequentially arranged on the optical filter from the first lens, and a center distance between the second lens and the third lens may be greater than a center distance between the first lens and the second lens. According to an embodiment of the invention, a fourth lens is included between the optical filter and the last lens, and a center distance between the third lens and the fourth lens may be less than a center distance between the second lens and the third lens. According to an embodiment of the invention, at least two of the lenses in the optical system are aspherical lenses on an optical axis, and the lenses in the optical system may be made of glass. According to an embodiment of the invention, the optical filter has a transmittance of 90% or more for some wavelengths within a range of 800 nm to 1000 nm, and the optical filter may be disposed closer to a lens located on the object side of the optical filter than to a lens located on the sensor side of the optical filter. According to an embodiment of the invention, the object-side lens and the sensor-side lens arranged on both sides of the optical filter may have a spherical shape on the optical axis. According to an embodiment of the invention, the lens between the lens adjacent to the object side of the optical filter and the first lens may be an aspherical lens made of glass.

According to an embodiment of the invention, the last lens may be an aspherical lens made of glass. According to an embodiment of the invention, the first lens may have a negative refractive power and a convex meniscus shape toward the object, and the last lens may have a positive refractive power and a shape in which both sides are convex. According to an embodiment of the invention, F number may be 1 or less.

An receiving optical system according to an embodiment of the invention includes first to fifth lenses aligned in optical axis from an object toward a sensing portion; and an optical filter spaced from the sensing portion and disposed between the third lens and the fourth lens, wherein the first lens has negative refractive power, at least two of the third to fifth lenses have positive refractive power, at least one lens between the first lens and the optical filter has an aspherical shape on an object-side surface and a sensor-side surface, and the fifth lens has an aspherical shape on an optical axis, and an optical axis distance between the second lens and the third lens may be the largest among optical axis distances between adjacent lenses among the first to fifth lenses.

According to an embodiment of the invention, the optical filter includes a band pass filter, and an optical axis distance from the optical filter to a surface of the sensing portion is D1, and a center thickness of the fifth lens is CT5, and the following equation may satisfy: (CT5*3) < D1 < (CT5*5). According to an embodiment of the invention, it may include an aperture stop disposed on periphery between the optical filter and a sensor-side surface of the third lens. According to an embodiment of the invention, a center distance between the third lens and the fourth lens may be CG3, a center thickness of the fifth lens may be CT5, and the following equation may satisfy: 1 < CG3/CT5 < 5. According to an embodiment of the invention, the first lens may include a convex object-side surface and a concave sensor-side surface on the optical axis, and the second lens may include a concave object-side surface and a concave sensor-side surface on the optical axis.

According to an embodiment of the invention, the first to fifth lenses may be made of glass, and the first, third, and fourth lenses may be lenses whose object-side surface and sensor-side surface are spherical. A receiving optical system according to an embodiment of the invention includes: first to fifth lenses aligned in an optical axis toward a sensing portion from an object; and a band pass filter disposed between spherical lenses among the first to fifth lenses, wherein object-side surfaces and sensor-side surfaces of the first, third, and fourth lenses have a spherical shape on the optical axis, object-side surfaces and sensor-side surfaces of the second and fifth lenses have an aspherical shape on the optical axis, an optical axis distance from the sensor-side surface of the fifth lens to a surface of the sensing portion is BFL, 1/2 of a diagonal length of the sensing portion is ImgH, the optical axis distance from the band pass filter to the surface of the sensing portion is D1, and the following equation may satisfy: ImgH < BFL < D1.

According to an embodiment of the invention, the first to fifth lenses are made of glass, the band pass filter is closer to the third lens than to the fourth lens, and the optical axis distance from the surface of the first lens to the surface of the sensing portion is TTL, and the following equation may satisfy: 10 < TTL / ImgH < 30.

### Advantageous Effects

According to an embodiment, it can have improved optical characteristics. Specifically, in the receiving optical system according to the embodiment, a position of the bandpass filter is positioned near the aperture stop so that the incident angle of light incident on the filter may be minimized. Accordingly, the transmittance range of the bandpass filter can be widely utilized according to the incident angle of light of the bandpass filter. The receiving optical system of the invention's LIDAR can maximize the effect of receiving light emitted from the transmission optical system.

The receiving optical system of the invention's LIDAR can have good optical characteristics in a temperature range from low to high temperature. Specifically, a plurality of lenses included in the receiving optical system can have set materials, refractive powers, and refractive indices. Accordingly, when the refractive index of each lens changes according to a temperature change and the focal length of each lens changes due to this, the aspherical lens and the spherical lens made of glass can mutually compensate for each other. That is, the receiving optical system can effectively perform distribution of refractive power in a temperature range from low to high temperature, and can prevent or minimize changes in optical characteristics in a temperature range from low to high temperature. Therefore, the optical system and sensor system according to the embodiment can maintain improved optical characteristics in various temperature ranges.

The receiving optical system of the LIDAR of the invention can have lenses with set thicknesses, refractive powers, and spacings with adjacent lenses. Accordingly, the optical system and sensor system according to the embodiment can have improved MTF characteristics, aberration control characteristics, resolution characteristics, etc. in the set field of view range, and can have good optical performance in the periphery of the field of view. The receiving optical system and sensor system according to the embodiment may satisfy the set field of view and implement excellent optical characteristics through a mixture of spherical lenses and aspherical lenses made of glass. As a result, the optical system can provide a vehicle sensor system with improved optical performance. Therefore, the optical system and sensor system can be provided to various applications and devices, and can have excellent optical characteristics even in harsh temperature environments, such as when exposed to the outside of a vehicle or inside a vehicle at high temperatures in the summer.

### Description of Drawings

FIG. 1 is a side cross-sectional view of a receiving optical system of a LIDAR according to the first embodiment.
FIG. 2 is a table showing lens characteristics of the receiving optical system of FIG. 1.
FIG. 3 is a table showing aspherical coefficients of lenses in the receiving optical system of FIG. 1.
FIG. 4 is a graph showing data of diffraction MTF (Modulation Transfer Function) of the receiving optical system of FIG. 1.
FIG. 5 is a graph showing data on aberration characteristics of the receiving optical system of FIG. 1.
FIG. 6 is a side cross-sectional view of a receiving optical system of a LIDAR according to the second embodiment.
FIG. 7 is a table showing lens characteristics of the receiving optical system of FIG. 6.
FIG. 8 is a table showing aspherical coefficients of lenses in the receiving optical system of FIG. 6.
FIG. 9 is a graph showing data of diffraction MTF of the receiving optical system of FIG. 6.
FIG. 10 is a graph showing data on aberration characteristics of the receiving optical system of FIG. 6.
FIG. 11 is a block diagram showing a sensor system having the receiving optical system of FIG. 1 and FIG. 6.
FIG. 12 is a side cross-sectional view showing a transmitting optical system of the sensor system of FIG. 11.
FIG. 13 is a drawing showing an example of measuring an object in a vehicle having the sensor system of the invention.
FIG. 14 is a drawing showing an example of surrounding surveillance in a vehicle having the sensor system of the invention.

### Best Mode

Hereinafter, preferred embodiments of the invention will be described in detail with reference to the accompanying drawings. A technical spirit of the invention is not limited to some embodiments to be described, and may be implemented in various other forms, and one or more of the components may be selectively combined and substituted for use within the scope of the technical spirit of the invention. In addition, the terms (including technical and scientific terms) used in the embodiments of the invention, unless specifically defined and described explicitly, may be interpreted in a meaning that may be generally understood by those having ordinary skill in the art to which the invention pertains, and terms that are commonly used such as terms defined in a dictionary should be able to interpret their meanings in consideration of the contextual meaning of the relevant technology.

The terms used in the embodiments of the invention are for explaining the embodiments and are not intended to limit the invention. In this specification, the singular forms also may include plural forms unless otherwise specifically stated in a phrase, and in the case in which at least one (or one or more) of A and (and) B, C is stated, it may include one or more of all combinations that may be combined with A, B, and C. In describing the components of the embodiments of the invention, terms such as first, second, A, B, (a), and (b) may be used. Such terms are only for distinguishing the component from other component, and may not be determined by the term by the nature, sequence or procedure etc. of the corresponding constituent element. And when it is described that a component is "connected ", "coupled" or "joined" to another component, the description may include not only being directly connected, coupled or joined to the other component but also being "connected ", "coupled" or "joined" by another component between the component and the other component. In addition, in the case of being described as being formed or disposed "above (on)" or "below (under)" of each component, the description includes not only when two components are in direct contact with each other, but also when one or more other components are formed or disposed between the two components. In addition, when expressed as "above (on)" or "below (under)", it may refer to a downward direction as well as an upward direction with respect to one element.

In the description of the invention, "object-side surface" may refer to a surface of the lens facing the object side with respect to the optical axis OA, and "sensor-side surface" may refer to a surface of the lens facing the imaging surface (image sensor) with respect to the optical axis. A convex surface of the lens may mean that the lens surface on the optical axis has a convex shape, and a concave surface of the lens may mean that the lens surface on the optical axis has a concave shape. A curvature radius, center thickness, and distance between lenses described in the table for lens data may mean values on the optical axis, and the unit is mm. The vertical direction may mean a direction perpendicular to the optical axis, and an end of the lens or the lens surface may mean the end or edge of the effective region of the lens through which the incident light passes. The effective diameter on the lens surface may have a measurement error of up to ±0.4 mm depending on the measurement method. The paraxial region refers to a very narrow region near the optical axis, and is a region in which a distance at which a light ray falls from the optical axis OA is almost zero. Hereinafter, the concave or convex shape of the lens surface will be described as an optical axis, and may also include a paraxial region.

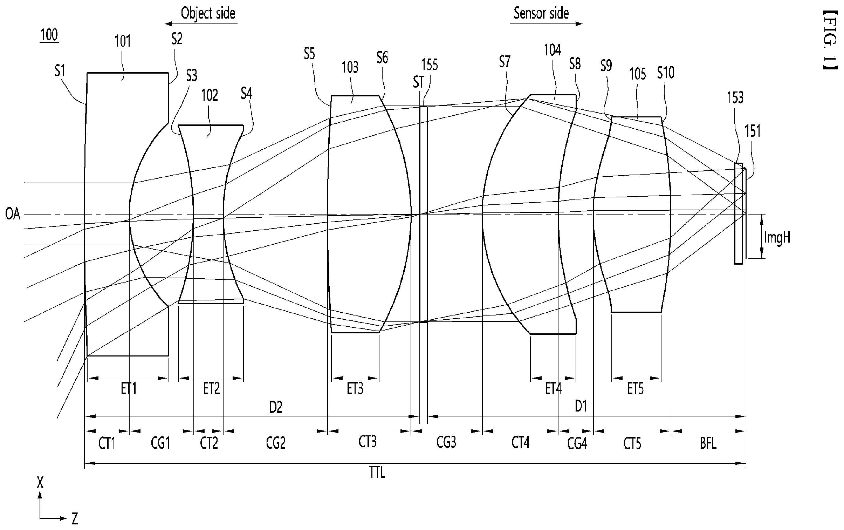

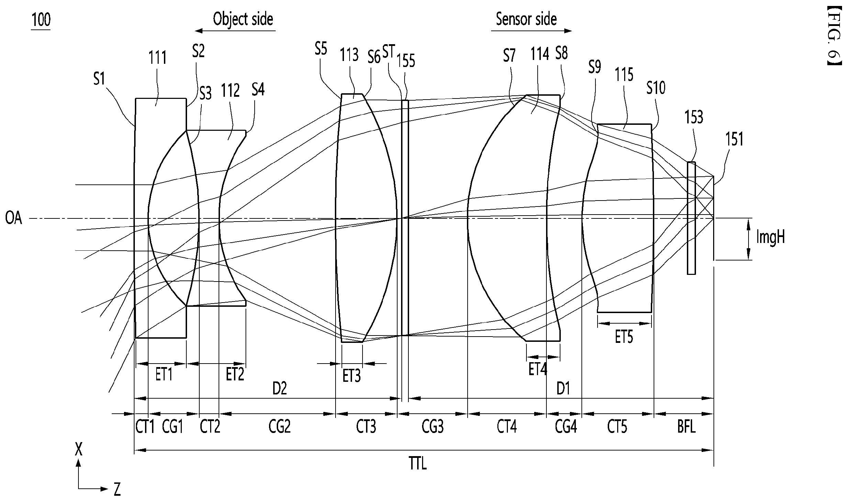

FIG. 1 and FIG. 6 are cross-sectional views showing a receiving optical system according to an embodiment of the invention.

Referring to FIG. 1 and FIG. 6, a receiving optical system 100 and a sensor system having the same may be mounted inside or outside a moving body to monitor a driver or sense external objects or lanes. The material of each of the lenses in the receiving optical system 100 may be selected from glass or plastic. The coefficient of linear expansion of glass lenses is smaller than the coefficient of linear expansion of plastic materials. Therefore, at least one of the lenses of the receiving optical system 100 may be made of glass to suppress changes in the focus position due to temperature changes. However, when configuring an optical system with spherical glass lenses, there is a limit to reducing the number of lenses, and there is a limit to reducing the size and weight.

The receiving optical system 100 of the embodiment of the invention may include a spherical lens and an aspherical lens. Here, the spherical lens is a lens in which at least one or both of the object-side surface and the sensor-side surface of the lens are spherical. The aspherical lens is a lens in which at least one or both of the object-side surface and the sensor-side surface of the lens are aspherical. The receiving optical system 100 may include a spherical glass lens and an aspherical glass lens. In addition, since the optical system 100 includes the aspherical lens, the total track length (TTL) may be reduced, and various aberrations such as spherical aberration and chromatic aberration may be well corrected due to the aspherical lens. In addition, the aspherical lens may minimize the distortion portion of the periphery of the sensing portion 151. The aspherical lens may be injection molded using glass or plastic.

The optical system 100 may include n lenses, and the n-th lens may be the last lens adjacent to the sensing portion 151, and the n-1th lens may be the lens closest to the last lens. The n is an integer greater than or equal to 4, for example, a range of 4 to 7 or a range of 4 to 6. The ratio of the spherical lens to the aspherical lens in the n lenses may be any one of 3:1, 4:1, 3:2, 2:3, 3:3, 5:2, or 4:2. Preferably, the number of the spherical lenses may be equal to or greater than the number of the aspherical lenses. Accordingly, the increase in the price of the optical system 100 may be suppressed. The number of the spherical lenses may be one or more than the number of the aspherical lenses.

The receiving optical system 100 may have a first lens 101 and 111 closest to the object made of glass. The glass material has a small amount of expansion and contraction change due to external temperature change, and the surface is not easily scratched, so that surface damage can be prevented. Accordingly, in the optical system 100, the first lens 101 and 111 on the object side may be arranged as a spherical lens, and the n-th lens may be arranged as an aspherical lens. Since the n-th lens in the optical system 100 is disposed as an aspherical lens, various aberrations can be corrected for the incident light of the sensing portion 151.

At least two lenses closest to the object in the optical system 100 can be arranged as a glass material, and the lenses adjacent to the outside have a smaller rate of contraction and expansion due to temperature change than those of a plastic material, so that deterioration of optical characteristics due to temperature change in the lens barrel can be prevented. The optical system 100 may arrange the last lens 105 and 115 closest to the sensing portion 151 as a glass mold material or an aspherical surface, and the last lens 105 and 115 has a smaller rate of change in shrinkage and expansion due to temperature change than a plastic material, so that deterioration of optical characteristics due to temperature change within the lens barrel can be prevented.

Each lens of the optical system 100 may have an object-side surface and a sensor-side surface. The lenses may include an object-side spherical lens and a sensor-side spherical lens, and an object-side aspherical lens and a sensor-side aspherical lens. The number of aspherical lenses of the optical system 100 may be smaller than the number of spherical lenses. The object-side aspherical lens may be disposed between the spherical lenses. In addition, at least one spherical lens may be disposed between the aspherical lenses. Since the optical system 100 arranges the aspherical lens adjacent to the sensing portion 151, various aberrations may be corrected. The spherical lens and the aspherical lens may be made of glass.

Among the lenses of the optical system 100, the lens having the maximum refractive index may be a spherical lens disposed between aspherical lenses, and the lens having the maximum Abbe number may be the first lens 101 and 111 or the second lens 102 and 112. Accordingly, since the lens having the maximum refractive index is disposed between the aspherical lenses, it is easy to change the radius of curvature of the last lenses and the increase in the effective diameter can be suppressed.

The lens surface having the maximum effective diameter within the optical system 100 may be disposed in the first lens 101 and 111 closest to the object. The first lens 101 and 111 may be made of glass and may be a spherical lens. The lens having the minimum effective diameter within the optical system 100 may be disposed between the aperture stop ST and the first lens 101 and 111. The lens having the minimum effective diameter may be an aspherical lens. In addition, the average effective diameter of the aspherical lenses may be smaller than the average effective diameter of the spherical lenses. Here, the effective diameter of the lens is the average value of the effective diameter of the object-side surface and the sensor-side surface of each lens. By adjusting the effective diameter of each lens, the optical system 100 may be miniaturized.

Each of the lenses may include an effective region and an ineffective region. The effective region may be a region through which light incident on each of the lenses passes. In other words, the effective region may be defined as an effective region or an effective diameter through which the incident light is refracted to implement optical characteristics. The ineffective region may be arranged around the effective region. The ineffective region may be a region where effective light is not incident on the plurality of lenses. In other words, the ineffective region may be a region unrelated to the optical characteristics. In addition, an end of the ineffective region may be a region fixed to a lens barrel (not shown) that accommodates the lens.

Among the lenses of the optical system 100, the lens having the maximum center thickness may be a spherical lens, and the lens having the maximum edge thickness may be a spherical lens. The average of the center thicknesses of the spherical lenses may be greater than the average of the center thicknesses of the aspherical lenses. The TTL (Total top length) may be reduced by the aspherical lenses having a thin thickness, and the incident light may be refracted into various paths.

In the optical system 100, the TTL may be more than 10 times the ImgH (Image height), for example, more than 10 times and less than 20 times. The TTL is a distance from the center of the object-side surface of the first lens 101 and 111 to the image surface of the sensing portion 151 in the optical axis OA. The ImgH is a distance from the center of the effective region of the sensing portion 151 to the diagonal end or 1/2 of the maximum diagonal length of the effective region of the sensing portion 151. In addition, the effective diameter of each lens within the optical system 100 may be greater than the diagonal length of the sensing portion 151. Within the optical system 100, the effective focal length (EFL) is provided to be 15 mm or less and the FOV is provided to be 60 degrees or more or 100 degrees or more, so that it can be provided as a standard receiving optical system in a vehicle sensor system. For example, the receiving optical system and the sensor system according to the embodiment can be applied to a sensing device for an ADAS (Advanced Driving Assistance System) installed inside or outside a vehicle.

The optical system 100 may satisfy the condition: 5 < TTL/(2*ImgH) ≤ 10. Accordingly, the center thickness of each lens along the optical axis OA can be increased and the size of the sensing portion 151 can be reduced, thereby providing a vehicle lens optical system. In addition, temperature compensation can be possible in a temperature range, that is, -45°C to +120°C, which is a temperature reliability evaluation criterion for automotive electrical components for use in vehicle cameras. The lens must be configured so that the focus of the lens is maintained within a set range even when the lens expands or contracts due to a change in temperature. The total effective focal length (EFL) may be 15 mm or less, for example, in a range of 1 mm to 15 mm or 7 mm to 13 mm, and can be configured with lenses made of glass material capable of the above-mentioned temperature compensation. By shortening the effective focal length of the optical system, a wide angle can be implemented.

In the optical system 100, the number of lenses having positive (+) refractive power may be equal to or greater than the number of lenses having negative (-) refractive power. The number of lenses having positive (+) refractive power may be 50% or more, for example, 55% or more, of the total number of lenses. The average refractive index of the lenses having negative refractive power may be less than the average of the lenses having positive refractive power. The difference between the average refractive index of the lenses having negative refractive power and the average of the lenses having positive refractive power may be 0.5 or less, for example, 0.2 or less. The dispersion value of the lenses having positive refractive power may be greater than the dispersion value of the lenses having negative refractive power. Since the optical system 100 mixes spherical lenses and aspherical lenses made of glass, various aberrations can be corrected, thereby preventing deterioration of optical performance. In the optical system 100, the ratio between the number of spherical lenses and the number of aspherical lenses may be equal to the ratio between the number of lenses having positive refractive power and the number of lenses having negative refractive power. Accordingly, various aberrations of the optical system 100 can be corrected, thereby preventing deterioration of optical performance.

The optical system 100 may include an optical filter 155, and the optical filter 155 may be disposed between two adjacent lenses. The optical filter 155 may be disposed between spherical lenses. The optical filter 155 may transmit light, for example, a laser wavelength, reflected from a subject after being emitted from a transmission optical system, and block other wavelengths. The transmitted laser wavelength may be in the range of 890 nm to 960 nm or 940 nm ±10 nm. As another example, the laser wavelength may be in the range of 1550 nm ±10 nm. The optical filter 155 may be a bandpass filter. The optical filter 155 may be disposed between two different lenses among the lenses. The optical filter 155 may be disposed between the spherical lenses. The optical filter 155 may be disposed between the third lens 103 and the fourth lens 104.

The optical filter 155 may perform an operation of allowing light of a specific wavelength (e.g., a wavelength range of approximately 800 to 1000 nm) or light belonging to a specific band to pass through, and blocking light outside the specific wavelength. The optical filter 155 may actively perform a filtering operation. To this end, the optical filter 155 may include an active device that, in response to an external control signal, allows only light having a specific wavelength to pass through, and blocks light of other wavelengths. The control signal provided to the optical filter 155 may include information on the central wavelength of light to pass through the active device, wherein the central wavelength may correspond to the central wavelength of light emitted from the transmission optical system. As a result, the control signal given to the optical filter 155 is a control signal that matches the center wavelength of the light emitted from the transmission optical system with the center wavelength of the light passing through the active device of the optical filter 155. Due to the active device included in the optical filter 155, the optical filter 155 can selectively pass only the desired light and block other noise light including natural light. Therefore, the signal-to-noise ratio (S/N) of the LIDAR system can be increased. As an example of the active device, the optical filter can include a tunable band-pass filter. The operation method of the tunable band-pass filter can be a liquid crystal method or an acousto-optic method.

The optical filter 155 is a TOF optical system that uses a specific wavelength or a designated wavelength band, and can block light outside the designated wavelength band from being incident on the sensor unit, thereby suppressing the occurrence of stray light. Therefore, since at least one lens is disposed between the optical filter 155 and the sensing portion 151, the occurrence of stray light can be suppressed. That is, since visible light outside the wavelength band is blocked by the lens(es) between the optical filter 155 and the sensing portion 151, the blocked visible light can be suppressed from being refracted, reflected or/and scattered by the lens(es) between the optical filter 155 and the sensing portion 151. The optical filter 155 may be a bandpass filter.

The optical system 100 and the camera module may have an F number of 1.5 or less. The F number may be in the range of 0.6 to 1.5 or in the range of 0.65 to 0.9. In configuring such a bright optical system, the camera module may include at least 5 lenses, and may be miniaturized and implement good optical performance by at least one aspherical lens. The sum of the refractive indices of the lenses in the optical system 100 may be greater than 5, for example, greater than 8.0, preferably in the range of 8.0 to 12.0, and the average of the refractive indices may be in the range of 1.70 to 1.82. The sum of the Abbe numbers of each of the lenses may be less than or equal to 220, for example, in the range of 120 to 220 or 160 to 210, and the average of the Abbe numbers may be less than or equal to 47, for example, in the range of 23 to 47. By controlling the refractive indices of the lenses in the optical system 100, it is possible to prevent degradation of optical performance for temperature changes from -45 to 120 degrees and to optimize thermal compensation. In addition, by controlling the Abbe number, it is possible to minimize the deviation of the spot size of incident light, i.e., to minimize the spot diagram size.

The sum of the center thicknesses of all lenses in the optical system 100 may be 30 mm or more, for example, in the range of 30 mm to 75 mm or 40 mm to 60 mm, and the average of the center thicknesses of each lens may be 15 mm or less, for example, in the range of 9 mm to 15 mm. The sum of the center distances between the lenses in the optical axis OA may be 30 mm or more, for example, in the range of 30 mm to 75 mm, and may be smaller than the sum of the center thicknesses of the lenses. In addition, the average value of the effective diameter of each lens surface of the optical system 100 may be provided as 50 mm or less, for example, in the range of 30 mm to 50 mm. By controlling the thickness of each lens in the optical system 100, it is possible to prevent degradation of optical performance for temperature changes from -45 to 120 degrees and to optimize thermal compensation. In an optical system according to an embodiment of the invention, the field of view may be 110 degrees or more, for example, in a range of 110 degrees or more to 150 degrees, and preferably, in a range of 120 degrees to 140 degrees. The diagonal length of the sensing portion 151 may be 14 mm or more, for example, in a range of 14 mm to 22 mm or 18 mm ± 1 mm, and may be greater than the sensor height in the vertical direction. The invention can provide a vehicle LIDAR device that suppresses a change in a focus imaging position due to a change in temperature by stacking glass lenses and corrects various aberrations by providing an aspherical lens.

The embodiment includes an optical system applied to a LIDAR device, and the first lens 101 and 111 may be provided as a glass material. This is because the glass material has the advantage of being scratch-resistant and insensitive to external temperature compared to a plastic material. In order to be placed inside a vehicle or to more effectively prevent scratches caused by foreign substances, a glass lens may be used as the first lens 101 and 111, and the object-side surface of the first lens 101 and 111 may have a convex shape so that external foreign substances do not accumulate. The LIDAR device can detect the distance, direction, speed, temperature, material distribution, and concentration characteristics to an object when the vehicle is running. Such a LIDAR device may be used for the ADAS. The optical system 100 according to the embodiment may further include a reflective member (not shown) for changing the path of light. The reflective member may be implemented as a prism that reflects incident light toward the lenses. Hereinafter, the optical system according to the embodiment will be described in detail. When the lenses having negative refractive power are the first lens group and the lenses having positive refractive power are the second lens group, the aperture stop ST and the optical filter 155 can be arranged in the second lens group. The aperture stop ST and the optical filter 155 can be disposed between the spherical lens surfaces of the second lens group.

An optical system according to a first embodiment of the invention will be described.

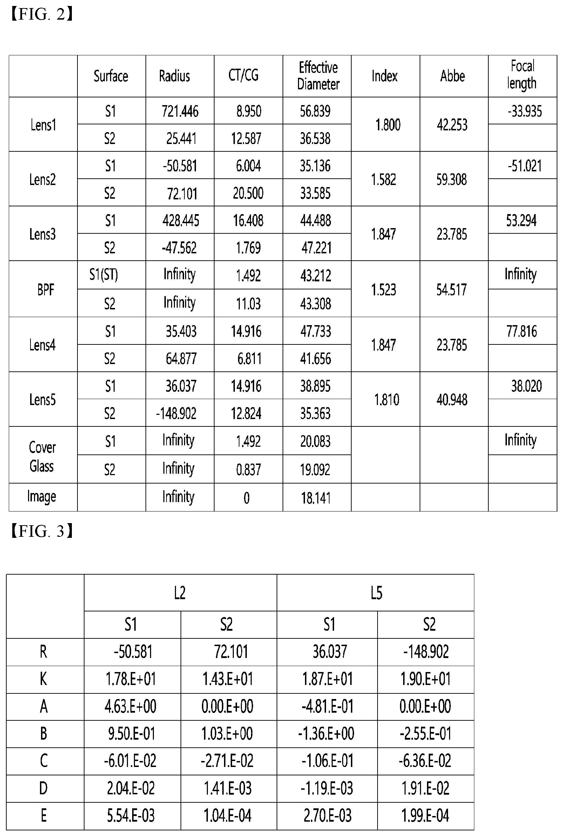

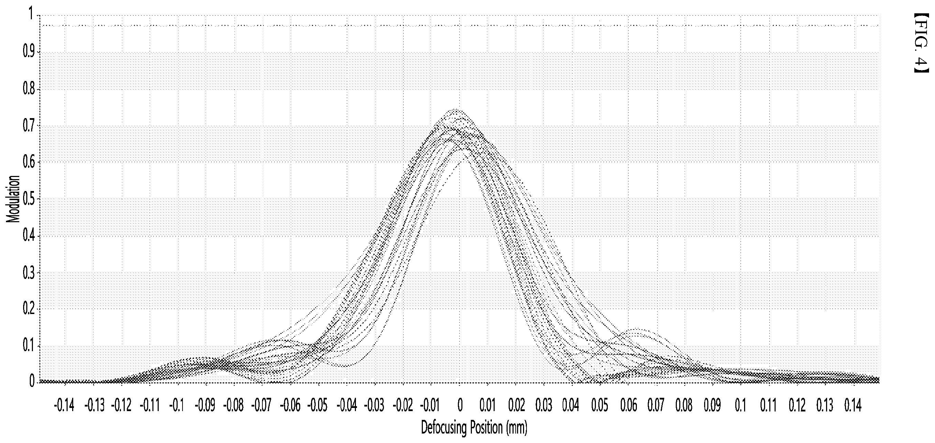

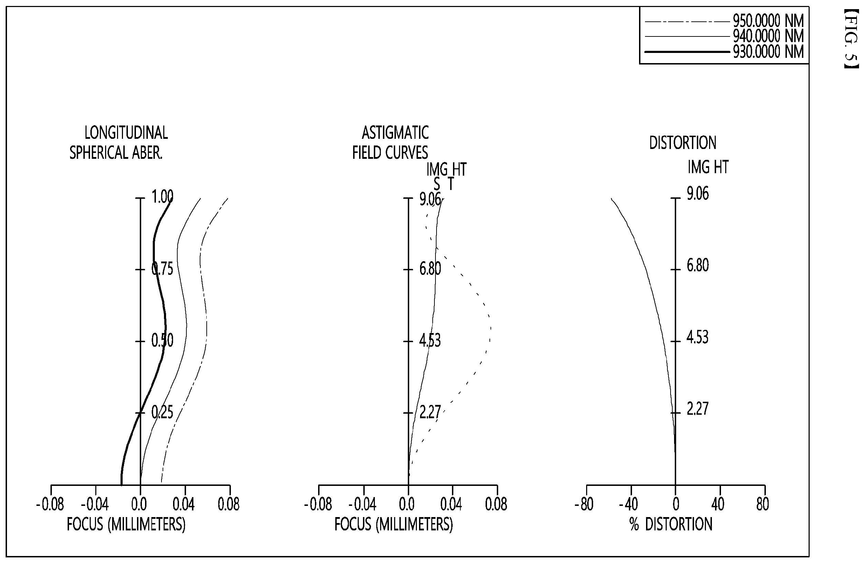

FIG. 1 is a cross-sectional view of a receiving optical system of a LIDAR according to the first embodiment, FIG. 2 is a table showing lens characteristics of the receiving optical system of FIG. 1, FIG. 3 is a table showing aspherical coefficients of lenses in the receiving optical system of FIG. 1, FIG. 4 is a graph showing data of diffraction MTF of the receiving optical system of FIG. 1, and FIG. 5 is a graph showing data on aberration characteristics of the receiving optical system of FIG. 1.

Referring to FIGS. 1 to 3, the optical system 100 may include a first lens 101, a second lens 102, a third lens 103, a fourth lens 104, and a fifth lens 105 aligned from the object side toward the sensor side along the optical axis OA. The first to fifth lenses 101, 102, 103, 104 and 105 may be defined as a lens unit. The lens portion and the sensing portion 151 may be defined as a camera module, a sensor system, or a lens assembly. The optical system 100 may include an optical filter 155, and the optical filter 155 may be disposed between the lenses. The optical filter 155 may be disposed between the spherical lenses. The optical filter 155 may be disposed between the aspherical lenses. The optical filter 155 may be disposed between the spherical lenses disposed between the aspherical lenses.

Light corresponding to information of an object may pass through the first lens 101 to the third lens 103, the optical filter 155, and the fourth and fifth lenses 104 and 105 and be incident on the sensing portion 151. The aperture stop ST may be placed around the sensor-side surface of the third lens 103. Each of the first to fifth lenses 101-105 may have positive (+) or negative (-) refractive power on the optical axis OA. At least one or all of the first to fifth lenses 101-105 may include a plastic material or a glass material, and may be, for example, a glass material.

The first lens 101 may have negative (-) refractive power. The first lens 101 may be a glass material. The first lens 101 made of the glass material can reduce changes in the center position and the radius of curvature due to temperature changes according to the surrounding environment, and can protect the incident side surface of the optical system 100. The first lens 101 is made of a glass material that is not injection molded. The object-side first surface S1 of the first lens 101 may be convex, and the sensor-side second surface S2 may be concave. The first surface S1 and the second surface S2 may have spherical surfaces. The first lens 101 may have a meniscus shape that is convex toward the object side. Alternatively, the first surface S1 may have a concave shape in the optical axis OA, and the second surface S2 may have a convex shape. Alternatively, the first lens 101 may have a concave shape on both sides. Since the first surface S1 has a convex shape and the second surface S2 has a concave shape, the incident light can be refracted in a direction close to the optical axis OA, the distance between the first and second lenses 101 and 102 can be reduced, and the effective diameter of the second lens 102 can be reduced. The increase in the effective diameter of the second lens 102 can be suppressed by the shape of the lens surface of the first lens 101.

When the refractive index of the first lens 101 is Nd1, the following condition may satisfy: 1.7 < Nd1 or 1.75 < Nd1 < 2.1. Since the refractive index Nd1 of the first lens 101 is greater than the refractive index of the second lens 102 which is an aspherical surface, the radius of curvature of the first surface S1 of the first lens 101 can be increased, and the first and second lenses can be easily manufactured. If the refractive index Nd1 of the first lens 101 is less than the condition, the lens surfaces must be formed to be sharply concave or convex in order to increase the refractive power of the first and second lenses 101 and 102. In this case, lens manufacturing is not easy, the lens defect rate increases, and this can cause a decrease in yield.

The second lens 102 may be disposed between the first lens 101 and the third lens 103. The second lens 102 may face the sensor-side surface of the first lens 101 and the object-side surface of the third lens 103. The second lens 102 may have negative (-) refractive power. The second lens 102 may be an aspherical lens made of glass. The object-side third surface S3 of the second lens 102 with respect to the optical axis OA may be concave, and the sensor-side fourth surface S4 may be concave. The third and fourth surfaces S3 and S4 may be aspherical, and, as shown in FIG. 4, represent the conic constant K of L2S1 and L2S2 and the aspherical coefficients from the 4th to the 14th orders A-F. The third and fourth surfaces S3 and S4 may be provided without a critical point from the optical axis OA to the end of the effective region. Alternatively, the third surface S3 may be convex and the fourth surface S4 may be concave. Alternatively, the second lens 102 may be convex on both sides. When the refractive index of the second lens 102 is Nd2, the following condition may satisfy: 1.75 > Nd2 or 1.52 < Nd2 < 1.75. The refractive index Nd2 of the second lens 102 may be smaller than the refractive indices of the other lenses. The center distance between the second and third lenses 102 and 103 may be increased by the shape of the second lens 102, and the center distance between the first and second lenses 101 and 102 may be secured.

The third lens 103 may have positive (+) refractive power on the optical axis. The third lens 103 may include a glass material. The third lens 103 may be a spherical lens made of glass. The object-side fifth surface S5 of the third lens 103 on the optical axis may be convex, and the sensor-side sixth surface S6 may be convex. The third lens 103 may have a convex shape on both sides of the optical axis OA. Alternatively, the third lens 103 may have a convex meniscus shape on the object side or the sensor side. Alternatively, the third lens 103 may have a concave shape on both sides of the optical axis. At least one or both of the fifth surface S5 and the sixth surface S6 may be spherical. At least one or both of the fifth surface S5 and the sixth surface S6 may be provided without a critical point from the optical axis OA to the end of the effective region. When the refractive index of the third lens 103 is Nd3, the following condition may satisfy: Nd2 < Nd3. When the Abbe number of the third lens 103 is Vd3, the following condition may satisfy: Vd3 < Vd2. Nd2 is the refractive index of the second lens 102, and Vd2 is the Abbe number of the second lens 102.

The aperture stop ST may be arranged around the sensor-side sixth surface S6 of the third lens 103. Since the third lens 103 located on the object side of the aperture stop ST has a positive refractive power (F3 > 0), the third lens 103 can refract incident light in the direction of the optical axis, and can suppress an increase in the effective diameter of lenses located on the sensor side compared to the third lens 103. Accordingly, a decrease in the yield by weight of the optical system can be prevented by the third lens 103, and production efficiency can be improved. Here, the power of the fourth and fifth lenses 104 and 105 located on the sensor side of the aperture stop ST can have a positive value, and the optical system can reduce the TTL within the angle of view range.

The sixth surface S6 on the sensor side of the third lens 103 has a convex shape and a smaller radius of curvature than the fifth surface S5, so that the center distance between the third lens 103 and the aperture stop ST may be smaller than the center distance between the aperture stop ST and the fourth lens 104. The effective diameter of the optical filter 155 located on the sensor side of the third lens 103 may be smaller than the effective diameter of the sixth surface S6 of the third lens 103. The optical filter 155 transmits a laser beam reflected by a subject after being emitted from the transmission optical system of the LIDAR device, and blocks beams of other wavelengths. The optical filter 155 may be located closer to the third lens 103 than to the fourth lens 104 in order to transmit a designated wavelength band and block an out-of-band wavelength band.

The fourth lens 104 may have positive (+) refractive power. The fourth lens 104 may include a glass material. The fourth lens 104 may be a spherical lens. The object-side seventh surface S7 of the fourth lens 104 on the optical axis may have a convex shape, and the sensor-side eighth surface S8 may have a concave shape. The fourth lens 104 may have a convex meniscus shape toward the object. Alternatively, the fourth lens 104 may have a convex meniscus shape toward the sensor. Alternatively, the fourth lens 104 may have concave shapes on both sides of the optical axis OA. At least one or both of the seventh surface S7 and the eighth surface S8 may be spherical. The seventh and eighth surfaces S7 and S8 may be provided without a critical point from the optical axis OA to the end of the effective region.

The fifth lens 105 can have positive (+) refractive power. The fifth lens 105 can include a glass material. The fifth lens 105 may be an aspherical lens. The object-side ninth surface S9 of the fifth lens 105 on the optical axis may have a convex shape, and the sensor-side tenth surface S10 may have a convex shape. The fifth lens 105 can have a convex shape on both sides. Alternatively, the fifth lens 105 can have a convex meniscus shape toward the object. Alternatively, the fifth lens 105 can have a concave shape on both sides. At least one or both of the ninth surface S9 and the tenth surface S10 may be aspherical. The aspherical coefficients of the ninth and tenth surfaces S9 and S10 may be provided as L5S1 and L5S2 of FIG. 3. The fifth lens 105 may be an aspherical lens closest to the sensing portion 151. By means of the lens surface having the aspherical surface, aberrations such as spherical aberration and chromatic aberration can be improved, and the influence on the resolution can be controlled. By means of the aspherical surface of the lens surface adjacent to the sensing portion 151, the optical performance can be improved, and for example, aberration characteristics can be improved and resolution degradation can be prevented. The ninth surface S9 of the fifth lens 105 may be provided without a critical point from the optical axis to the end of the effective region, or may have at least one critical point. The tenth surface S10 may be provided without a critical point from the optical axis to the end of the effective region. Here, the critical point may mean a point where the sign of the slope value with respect to the optical axis OA and the direction perpendicular to the optical axis OA changes from positive (+) to negative (-) or from negative (-) to positive (+), and may mean a point where the slope value is 0. In addition, the critical point may be a point where the slope value of the tangent line passing through the lens surface increases and then decreases, or a point where it decreases and then increases.

When the refractive index of the fifth lens 105 is Nd5, the following condition may satisfy: Nd5 < Nd4. When the Abbe number of the fifth lens 105 is Vd5, the following condition may satisfy: Vd4 < Vd5. Nd4 is the refractive index of the fourth lens 104, and Vd4 is the Abbe number of the fourth lens 104. The first, third, and fourth lenses 101, 103, and 104 may be made of the same material, or may be made of a material having a refractive index difference of 0.10 or less. The materials of the second and fifth lenses 102 and 105 may be the same or have a difference in refractive index of 0.3 or less. The fifth lens 105 may have a lower refractive index than the third and fourth lenses 103 and 104 and an Abbe number higher than the Abbe number of the third and fourth lenses 103 and 104.

An effective diameter of the fifth lens 105 may be smaller than an effective diameter of the fourth lens 104. The effective diameter of the first lens 101 may be the largest among the lenses. The lens surface having the largest effective diameter among the object-side surfaces of the lenses may be the first surface S1, and the lens surface having the largest effective diameter among the sensor-side surfaces of the lenses may be the sixth surface S6. The lens surface having the minimum effective diameter among the object-side surfaces of the lenses may be the third surface S3, and the lens surface having the minimum effective diameter among the sensor-side surfaces of the lenses may be the fourth surface S4. Among the object-side surfaces and the sensor-side surfaces, the lens surface having the maximum effective diameter may be the first surface S1, and the lens surface having the minimum effective diameter may be the third surface S3.

The effective diameter of the first lens 101 may be larger than the effective diameter of the fifth lens 105 closest to the sensing portion 151. Accordingly, the brightness of the optical system 100 may be controlled. The first and second lenses 101 and 102 may have negative power, and the third lens 103, the fourth lens 104, and the fifth lens 105 may have positive power. By controlling the effective diameter of each of the lenses 101-105, the optical system 100 can control the incident light to compensate for the deterioration of the resolution and optical characteristics due to temperature change, improve the chromatic aberration control characteristics, and improve the vignetting characteristics of the optical system 100. As another example, at least one of the object-side and sensor-side surfaces of the second and fifth lenses 102 and 105 can have a free-form surface, i.e., a non-rotationally symmetrical surface.

The optical filter 155 can transmit light, for example, a laser wavelength, reflected from a subject after being emitted from a transmission optical system, and block other wavelengths. The transmitted laser wavelength may be in the range of 890 nm to 960 nm or 940 nm ±10 nm. As another example, the laser wavelength may be in the range of 1550 nm ±10 nm.

The third lens 103 is disposed on the object side of the optical filter 155, has a refractive index greater than that of the second lens 102, and has a center thickness CT3 greater than that of the first lens 101. The fourth lens 104 is disposed on the sensor side of the optical filter 155, has a refractive index greater than that of the fifth lens 105, and has a center thickness CT5 greater than that of the first lens 101. The center distance CG3 between the third lens 103 and the fourth lens 104 may be greater than the thickness of the optical filter 155. The center distance CG2 between the second and third lenses 102 and 103 may be greater than the center distance CG3 between the third and fourth lenses 103 and 104 on which the optical filter 155 is arranged, and may be the largest among the center distances between two adjacent lenses in the optical system 100.

When the radius of curvature of each lens surface on the optical axis is described as an absolute value, the lens surface having the minimum radius of curvature may be the second surface S2 of the first lens 101. The lens surface having the maximum radius of curvature may be the first surface S1 of the first lens 101. Accordingly, the amount of incident light of the first lens 101 is increased, and the center distance between the first and second lenses 101 and 102 is the largest among the regions between the first and second lenses 101 and 102, so that an increase in the effective diameter of the second lens 102 can be suppressed. The lens having the largest difference in curvature radius between the object-side surface and the sensor-side surface of each lens is the first lens 101, and the lens having the second largest difference in curvature radius is the third lens. Accordingly, when the curvature radii of the first and third lenses 101 and 103 are adjusted, irregular reflection between adjacent lens surfaces can be prevented, thereby reducing lens ghost, and also preventing MPI (Multi-path interference) caused by lens ghost. The first surface S1 on the object side of the first lens 101 is provided with a radius of curvature of 300 mm or more, for example, more than 20 times the radius of curvature of the second surface S2, so that distortion of reflected light can be reduced and the depth of field can be further increased, thereby improving image quality under low-light conditions.

The optical system 100 or the sensor system may include a sensing portion 151. The sensing portion 151 can detect light that has sequentially passed through the lenses. The sensing portion 151 can detect the light and convert it into an electrical signal. The sensing portion 151 obtains various information about the subject. The sensing portion 151 detects time delay or phase difference information from the incident light and, based on this, obtains distance information to the subject, position information of the subject, a depth image of the subject, etc. For this purpose, the sensing portion 151 may include a device capable of detecting incident light, such as an image sensor, for example, a CCD (Charge coupled device) or a CMOS (Complementary metal oxide semiconductor). As another example, the sensing portion may include a TDC (Time to digital converter). Here, the effective length of the sensing portion 151 is the maximum length in the diagonal direction orthogonal to the optical axis OA, and here, the number of lenses having an effective diameter larger than the effective length of the sensing portion 151 is 4 to 6, and there may be no number of lenses having an effective diameter smaller than the effective length of the sensing portion 151.

At least two lenses may be disposed between the optical filter 155 and the sensing portion 151. For example, the fourth and fifth lenses 104 and 105 may be disposed between the optical filter 155 and the sensing portion 151. A spherical lens and an aspherical lens may be disposed between the optical filter 155 and the sensing portion 151. The optical filter 155 may be disposed between the spherical third lens 103 and the spherical fourth lens 104. The optical filter 155 may be disposed between the sixth surface S6 of the third lens 103 and the seventh surface S7 of the fourth lens 104. The optical filter 155 may have a transmittance of 90% or more for at least a part of a wavelength band ranging from 800 nm to 1000 nm. The optical filter 155 may be, for example, a band pass filter that passes a laser beam ranging from 890 nm to 960 nm or 940 nm ±10 nm. As another example, the optical filter 155 may transmit a range of 1550 nm ±10 nm and block other wavelengths. The optical filter 155 above can pass a wavelength corresponding to a laser beam transmitted from a transmission optical system of a LIDAR device and block light corresponding to the remaining ambient light.

The cover glass 153 is disposed between the last lens and the sensing portion 151, and can protect the upper portion of the sensing portion 151 and prevent the reliability of the sensing portion 151 from being deteriorated. The cover glass 153 can be removed. The cover glass 153 may be a protective glass.

The aperture stop ST can adjust the amount of light incident on the optical system 100. The aperture stop ST may be disposed on the periphery between the third lens 103 and the fourth lens 104. The aperture stop ST may be disposed on the periphery between the third lens 103 and the fourth lens 104. The aperture stop ST may be arranged closer to the sixth surface S6 of the third lens 103 than to the seventh surface S7 of the fourth lens 104. The aperture stop ST may be disposed on the periphery between the third lens 103 and the optical filter 155.

The lens surface on which the aperture stop ST is arranged may more efficiently control and guide the amount of light of the optical system 100. As in the embodiment, the aperture stop ST may be disposed on the sensor-side surface of the third lens 103 or the object-side surface of the optical filter 155. Alternatively, the aperture stop ST may be disposed on the periphery of the object-side surface or the sensor-side surface of the second lens 102. Alternatively, at least one lens selected from the plurality of lenses, for example, the object-side surface or the sensor-side surface of the third lens 103, may function as an aperture stop.

As shown in FIGS. 1 and 2, the center thickness of the first to fifth lenses 101-105 is represented by CT1-CT5, the edge thickness at the end of the effective region of each lens is represented by ET1-ET5, and the center distance (e.g., center gap) between two adjacent lenses is represented by CG1-CG4. The first to fifth lenses 101-105 may satisfy the following conditions, and * indicates multiplication.

| | |
|---|---|
| Condition 1: CT1 < CT3 | Condition 2: CT2*2 < CT5 |
| Condition 3: (CT4-CT5) < (CT3-CT2) | Condition 4: ET3 < ET2 < ET1 |
| Condition 5: ET4 < ET2 < CT5 | |

One of the center thicknesses CT3 and CT4 of the third and fourth lenses 103 and 104 is the maximum among the center thicknesses of the lenses, and one of the center thicknesses CT1 and CT2 of the first and second lenses 101 and 102 is the minimum among the center thicknesses of the lenses. Preferably, the center thickness CT3 of the third lens 103 is the maximum among the lenses, and the center thickness CT2 of the second lens 102 is the minimum among the lenses. The maximum center thickness may be more than twice the minimum center thickness, and the difference between the maximum center thickness and the minimum center thickness may be 4 mm or more. That is, at least two of the center thicknesses of the spherical material lenses may be thinner than the center thickness of the last aspherical lens, so that the thickness of the sensor system can be controlled. By controlling the thickness of these lenses, thermal compensation can be performed for temperatures that vary from low to high temperatures.

If the center distance CG between adjacent lenses is described, the following conditions may be satisfied.

| | |
|---|---|
| Condition 1: CT1 < CG1 | Condition 2: CG1 < CG2 < CG1*2 |
| Condition 3: CG1 < CG3 < CG2 | Condition 4: CG4 < CG1 < CG4*3 |
| Condition 5: CT3 < CG2 | Condition 6: CT2*2 < CG2 |
| Condition 7: (CT1+CT2) < CG2 | |

Here, the difference between the maximum center distance and the minimum center distance may be 5 mm or more, for example, in the range of 5 mm to 20 mm. In addition, by providing the maximum center distance between the lenses to be greater than the maximum center thickness of each lens, a receiving optical system may be provided in which the center distance between the spherical lens and the aspherical lens does not increase. In addition, since the maximum center distance between the lenses is provided to be twice as large as the minimum center thickness of each lens, the optical path can be controlled.

The effective diameters of each lens 101-105 are CA1-CA5, the effective diameters of the first and second surfaces S1 and S2 of the first lens 101 are CA11 and CA12, the effective diameters of the third and fourth surfaces S3 and S4 of the second lens 102 are CA21 and CA22, the effective diameters of the fifth and sixth surfaces S5 and S6 of the third lens 103 are CA31 and CA32, the effective diameters of the seventh and eighth surfaces S7 and S8 of the fourth lens 104 are CA41 and CA42, and the effective diameters of the ninth and tenth surfaces S9 and S10 of the fifth lens 105 are CA51 and CA52. The effective diameters of each lens may satisfy the following conditions.

| | |
|---|---|
| Condition 1: CA12 < CA11 < CA12*2 | Condition 2: CA2 < CA1 |
| Condition 3: CA2 < CA3 | Condition 4: 0.5 < CA21/CA22 < 1.5 |
| Condition 5: 0.5 < CA3/CA4 < 1.5 | Condition 6: 0.5 < CA32/CA31 < 1.5 |
| Condition 7: 0.5 < CA41/CA42 < 1.5 | Condition 8: 0.5 < CA51/CA52 < 1.5 |
| Condition 9: CA5 < CA4 | |

The lens having the maximum effective diameter may be the first lens 101. The first lens 101 having the maximum effective diameter may be a spherical lens made of glass. The lens surface having the maximum effective diameter may be the first surface S1 of the first lens 101. The lens having the minimum effective diameter may be the second lens 102 adjacent to the first lens 101. The lens surface having the minimum effective diameter may be the fourth surface S4 of the second lens 102, and may be less than 70% of the first surface S1. The effective diameter of each of the first to fifth lenses 101-105 may be greater than the diagonal length of the effective region of the sensing portion 151. The fifth lens 105 has an aspherical surface and can guide light incident through the fourth lens 104, which is a spherical lens, to the entire region of the sensing portion 151.

FIG. 2 is an example of lens data of the optical system of the embodiment of FIG. 1. As shown in FIG. 2, the radius of curvature on the optical axis OA of the first to fifth lenses 101, 102, 103, 104, and 105, the center thickness CT of the lenses, the center distance CG (e.g., Center gap) between the lenses, the refractive index at the d-line, the Abbe number, and the size of the effective diameter can be set. As shown in FIG. 3, among the lenses of the embodiment of FIG. 1, the lens surfaces of the second and fifth lenses 102 and 105 may include an aspherical surface having a radius of curvature R, a conic constant K, and a 14th-order aspherical coefficient A-E. For example, the object-side surface and the sensor-side surface of the second and fifth lenses 102 and 105 may be lens surfaces having a 14th-order aspherical coefficient. As described above, since an aspherical surface having a 14th-order aspherical coefficient (a non-zero value) can significantly change the aspherical shape of the periphery, the optical performance of the periphery of the FOV can be well compensated.

The focal lengths F1 and F2 of the first and second lenses 101 and 102 may have negative refractive power, and the focal lengths F3, F4 and F5 of the third, fourth, and fifth lenses 103, 104 and 105 may have positive refractive power. In addition, the second lens 102 and the third lens 103, which are adjacently arranged lenses, may satisfy the following conditions.
Condition 1: Refractive index of lens with positive refractive power > Refractive index of lens with negative refractive power
Condition 2: Dispersion of lens with positive refractive power < Dispersion of lens with negative refractive power

Here, among the lenses, the second lens 102 has negative refractive power and the third lens 103 has positive refractive power, so according to the conditions 1 and 2, the refractive index of the third lens 103 is greater than the refractive index of the second lens 102, and the dispersion value of the third lens 103 is less than the dispersion value of the second lens 102. Chromatic aberration occurring in a spherical lens can be corrected by a spherical lens. In addition, by satisfying the refractive index difference of 0.1 or less and the Abbe number difference of 10 or less between the third lens 103 and the fourth lens 104, which are spherical lenses arranged in succession, the chromatic aberration occurring in the spherical lens can be compensated for by the spherical lens.

The refractive power F1-F5 and the total focal length F of each lens may satisfy the following conditions.

| | |
|---|---|
| Condition 1: \|F1\| < \|F2\| | Condition 2: \|F1\| < F3 |
| Condition 3: 0.5 < F3/\|F2\| < 1.5 | Condition 4: F5 < F3 < F4 |
| Condition 5: F < F5 | Condition 6: F < \|F1\| |
| Condition 7: F < BFL | |

Here, F is the effective focal length of the optical system, and BFL is the optical axis distance from the last lens, i.e., the fifth lens 105, to the surface of the image sensor, which is the sensing portion 151. The focal length of the fourth lens 104 is the largest among the lenses, and may be 50 mm or more and 100 mm or less. Accordingly, it can have improved MTF characteristics, aberration control characteristics, resolution characteristics, etc. in the field of view range set by the optical system, and can have good optical performance in the periphery of the field of view.

The composite focal length of the first and second lenses is F12, the composite focal length of the third to fifth lenses is F35, the composite focal length of the first to third lenses is F13, and the composite focal length of the fourth and fifth lenses is F45, and the following conditions may be satisfied.

| | |
|---|---|
| Condition 1: \|F12\| < F35 (F12 < 0) | Condition 2: F45 < F13 |
| Condition 3: F < F24 < F3 | |

Here, F is the total focal length, and F24 is the composite focal length of the second to fourth lenses.

TTL is the optical axis distance from the object-side surface of the first lens 101 to the surface of the sensing portion 151, and FOV is the field of view of the optical system. TTL and FOV may satisfy the following conditions.

| | |
|---|---|
| Condition 1: CA11*2 < TTL | Condition 2: F4 < TTL |
| Condition 3: 0.5 < TTL /FOV < 1.5 | |

FIG. 4 is a graph showing the diffraction MTF in the optical system of FIG. 1, and is a graph showing the modulation of the luminance according to the spatial frequency. That is, FIG. 4 shows the diffraction MTF at room temperature, and is a graph measuring the luminance ratio according to the position of the defocusing position. FIG. 5 is a graph showing the aberration characteristics in the optical system of FIG. 1. The graph of FIG. 5 is a graph measuring longitudinal spherical aberration, astigmatic field curves, and distortion from left to right. In FIG. 5, the X-axis can represent the focal length (mm) and distortion (%), and the Y-axis can represent the height of the image. In addition, the graph for spherical aberration is a graph for light in wavelength bands of about 930 nm, about 940 nm, and about 950 nm, and the graphs for astigmatic aberration and distortion aberration are graphs for light in wavelength bands of about 940 nm. In the aberration diagram of FIG. 5, the closer each curve at room temperature is to the Y-axis, the better the aberration correction function can be interpreted. That is, the optical system 100 according to the embodiment has improved resolution and can have good optical performance in the center and periphery of the FOV.

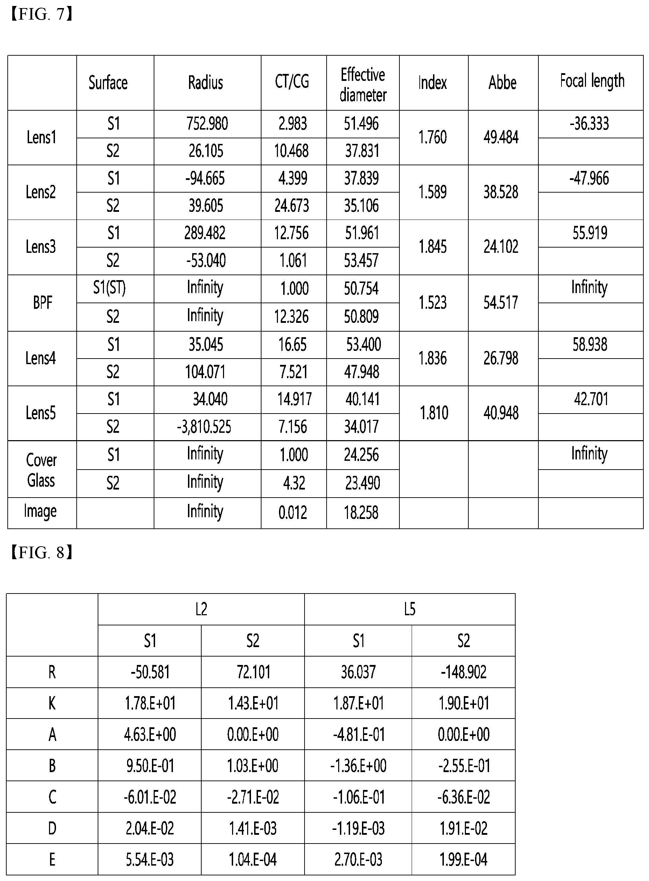

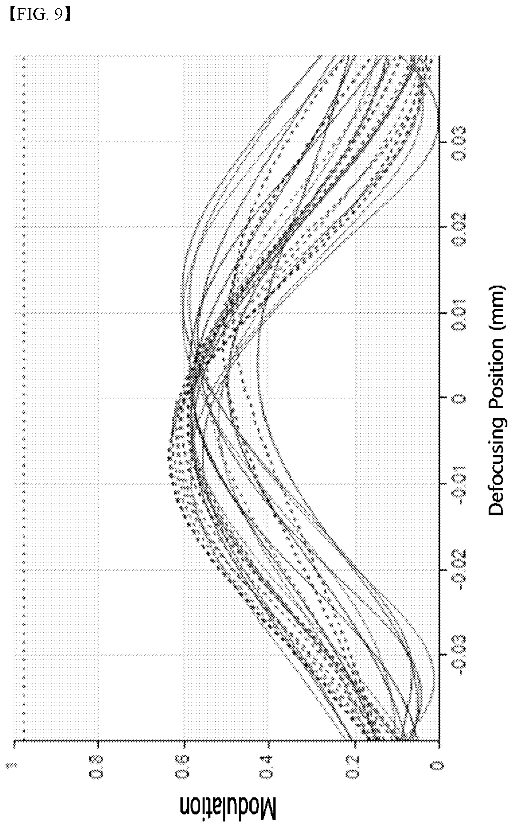

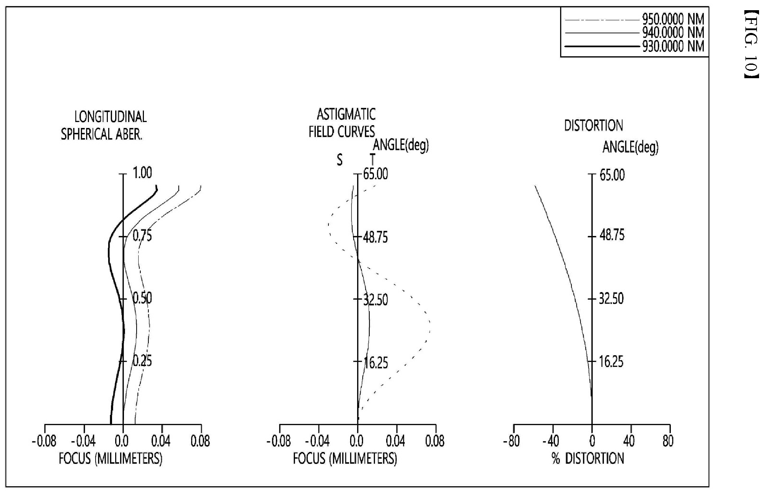

An optical system according to the second embodiment of the invention will be described. In explaining the second embodiment, the same configuration as the first embodiment will be referred to the explanation of the first embodiment. FIG. 6 is a cross-sectional view of a receiving optical system of a LIDAR according to the second embodiment, FIG. 7 is a table showing lens characteristics of the receiving optical system of FIG. 6, FIG. 8 is a table showing aspherical coefficients of lenses in the receiving optical system of FIG. 6, FIG. 9 is a graph showing data of diffraction MTF of the receiving optical system of FIG. 6, and FIG. 10 is a graph showing data on aberration characteristics of the receiving optical system of FIG. 6.

Referring to FIGS. 6 to 8, the optical system 100 may include a first lens 111, a second lens 112, a third lens 113, an optical filter 155, a fourth lens 114, and a fifth lens 115. Each of the first to fifth lenses 111-115 may have positive (+) or negative (-) refractive power on the optical axis OA. At least one or all of the first to fifth lenses 111-115 may include a plastic material or a glass material, and for example, the first to fifth lenses 111-115 may be made of glass. The first and second lenses 111 and 112 may have negative refractive power. The third, fourth, and fifth lenses 113, 114 and 115 may have positive refractive power.

The object-side first surface S1 of the first lens 111 may be convex, and the sensor-side second surface S2 may be concave. The first surface S1 and the second surface S2 may have spherical surfaces. When the refractive index of the first lens 111 is Nd1, the following condition may satisfy: 1.7 < Nd1 or 1.75 < Nd1 < 2.1. The second lens 112 may be an aspherical lens made of glass. The object-side third surface S3 of the second lens 112 may be concave, and the sensor-side fourth surface S4 may be concave. The third and fourth surfaces (S3, S4) may be aspherical, and represent the conic constant K of L2S1 and L2S2 and the aspherical coefficients A-F from the 4th-order to the 14th-order as shown in FIG. 9. When the refractive index of the second lens 112 is Nd2, the following condition may satisfy: 1.75 > Nd2 or 1.52 < Nd2 < 1.75. The center distance between the second and third lenses 112 and 113 may be increased by the shape of the second lens 112, and the center distance between the first and second lenses 111 and 112 can be secured.

The third lens 113 may be a spherical lens made of glass. The object-side fifth surface S5 of the third lens 113 may be convex, and the sensor-side sixth surface S6 may be convex. At least one or both of the fifth surface S5 and the sixth surface S6 may be spherical. When the refractive index of the third lens 113 is Nd3, the following condition may satisfy: Nd2 < Nd3. When the Abbe number of the third lens 113 is Vd3, the following condition may satisfy: Vd3 < Vd2. The aperture stop ST may be arranged around the sensor-side sixth surface S6 of the third lens 113. The aperture stop ST may be disposed between the third and fourth lenses 113 and 114. The aperture stop ST may be disposed between the third lens 113 and the optical filter 155.

Since the sensor-side sixth surface S6 of the third lens 113 has a convex shape and has a smaller radius of curvature than the fifth surface S5, the center distance between the third lens 113 and the aperture stop ST may be smaller than the center distance between the aperture stop ST and the fourth lens 114. The effective diameter of the optical filter 155 located on the sensor side of the third lens 113 may be smaller than the effective diameter of the sixth surface S6 of the third lens 113.

The fourth lens 114 may be a spherical lens. The object-side seventh surface S7 of the fourth lens 114 may have a convex shape, and the sensor-side eighth surface S8 may have a concave shape. At least one or both of the seventh surface S7 and the eighth surface S8 may be spherical. The fifth lens 115 may be an aspherical lens. The object-side ninth surface S9 of the fifth lens 115 with respect to the optical axis may have a convex shape, and the sensor-side tenth surface S10 may have a convex shape. The fifth lens 115 may have a convex shape on both sides. The aspherical coefficients of the ninth and tenth surfaces S9 and S10 may be provided as L5S1 and L5S2 of FIG. 8. The fifth lens 115 may be an aspherical lens that is closest to the sensing portion 151. By the lens surface having an aspherical surface, aberrations such as spherical aberration and chromatic aberration can be improved, and the influence on the resolution can be controlled. The optical performance can be improved by the aspherical surface of the lens surface adjacent to the sensing portion 151, and for example, aberration characteristics can be improved and resolution degradation can be prevented. The ninth surface S9 of the fifth lens 115 may be provided without a critical point from the optical axis to the end of the effective region, or can have at least one critical point. The tenth surface S10 may be provided without a critical point from the optical axis to the end of the effective region.

When the refractive index of the fifth lens 115 is Nd5, the following condition may satisfy: Nd5 < Nd4. When the Abbe number of the fifth lens 115 is Vd5, the following condition may satisfy: Vd4 < Vd5. The first, third, and fourth lenses 111, 113 and 114 may be made of the same material, or materials having a refractive index difference of 0.15 or less. The materials of the second and fifth lenses 112 and 115 may be the same or have a difference in refractive index of 0.3 or less. The fifth lens 115 may have a lower refractive index than the refractive indices of the third and fourth lenses 113 and 114 and may have an Abbe number higher than the Abbe number of the third and fourth lenses 113 and 114.

The effective diameter of the fifth lens 115 may be smaller than the effective diameter of the fourth lens 114. The effective diameter of the third lens 113 may be the largest among the lenses. Among the object-side surfaces of the lenses, the lens surface having the largest effective diameter may be the seventh surface S7, and among the sensor-side surfaces of the lenses, the lens surface having the largest effective diameter may be the sixth surface S6. Among the object-side surfaces of the lenses, the lens surface having the minimum effective diameter may be the third surface S3, and among the sensor-side surfaces of the lenses, the lens surface having the minimum effective diameter may be the tenth surface S10. Among the object-side surfaces and the sensor-side surfaces, the lens surface having the maximum effective diameter may be the sixth surface S6 or the seventh surface S7, and the lens surface having the minimum effective diameter may be the tenth surface S10.

The effective diameter of the first lens 111 may be larger than the effective diameter of the fifth lens 115 closest to the sensing portion 151. Accordingly, the brightness of the optical system 100 may be controlled. By controlling the effective diameter of each of the lenses 111-115, the optical system 100 can control the incident light to compensate for the deterioration of the resolution and optical characteristics due to temperature change, improve the chromatic aberration control characteristics, and improve the vignetting characteristics of the optical system 100. As another example, at least one of the object-side and sensor-side surfaces of the second and fifth lenses 112 and 115 can have a free-form surface, i.e., a non-rotationally symmetrical surface.

The third lens 113 is disposed on the object side of the optical filter 155, has a refractive index greater than that of the second lens 112, and may have a center thickness CT3 greater than that of the first lens 111. The fourth lens 114 is disposed on the sensor side of the optical filter 155, has a refractive index greater than that of the fifth lens 115, and may have a center thickness CT5 greater than that of the first lens 111. Since the optical filter 155 is disposed closer to the object than the fifth lens 115, the incident angle of light can be adjusted and the occurrence of stray light can be suppressed. The center distance CG2 between the second and third lenses 112 and 113 is greater than the center distance CG3 between the third and fourth lenses 113 and 114 where the optical filter 155 is arranged, and may be the largest among the center distances between two adjacent lenses in the optical system 100.

When the radius of curvature of each lens surface on the optical axis is described as an absolute value, the lens surface having the minimum radius of curvature may be the second surface S2 of the first lens 111. Since the radius of curvature of the first surface S1 of the first lens 111 is provided to be 300 mm or more, the amount of incident light of the first lens 111 is increased, and the center distance between the first and second lenses 111 and 112 is the largest among the regions between the first and second lenses 111 and 112, and an increase in the effective diameter of the second lens 112 can be suppressed. In addition, the lens surface having the maximum radius of curvature may be the tenth surface S10 of the fifth lens 115. Accordingly, the size of the sensing portion 151 may not be increased, and the fifth lens 115 may refract light to the entire region of the sensing portion 151. The lens having the largest difference in the radius (absolute value) of curvature between the object-side surface and the sensor-side surface of each lens is the fifth lens 115, and the second largest lens is the first lens 111. The object-side first surface S1 of the first lens 111 has a radius of curvature of 300 mm or more, which is provided to be 20 times greater than the radius of curvature of the second surface S2, so that distortion of reflected light can be reduced and the depth of field can be further increased, thereby improving image quality under low-light conditions.

At least two lenses may be disposed between the optical filter 155 and the sensing portion 151. For example, the fourth and fifth lenses 114 and 115 may be disposed between the optical filter 155 and the sensing portion 151. A spherical lens and an aspherical lens may be disposed between the optical filter 155 and the sensing portion 151. The optical filter 155 may be disposed between the spherical third lens 113 and the spherical fourth lens 114. The cover glass 153 is disposed between the last lens and the sensing portion 151, and protects the upper portion of the sensing portion 151 and prevents the reliability of the sensing portion 151 from being deteriorated.

As shown in FIGS. 6 and 7, the first to fifth lenses 111-115 may satisfy the following conditions, and * indicates multiplication.

| | |
|---|---|
| Condition 1: CT1 < CT3 | Condition 2: CT2*2 < CT5 |
| Condition 3: (CT4-CT5) < (CT3-CT2) | Condition 4: ET3 < ET2 < ET1 |
| Condition 5: ET4 < ET2 < CT5 | |

The center thickness CT4 of the fourth lens 114 is the largest among the lenses, and the center thickness CT1 of the first lens 111 is the smallest among the lenses. The maximum center thickness may be more than twice the minimum center thickness, and the difference between the maximum center thickness and the minimum center thickness may be 4 mm or more. That is, at least two of the center thicknesses of the spherical material lenses may be thinner than the center thickness of the last aspherical lens, so that the thickness of the sensor system can be adjusted. By adjusting the thickness of these lenses, thermal compensation can be performed for temperatures that change from low to high temperatures.

If the center distance CG between adjacent lenses is described, the following conditions may be satisfied.

| | |
|---|---|
| Condition 1: CT1 < CG1 | Condition 2: CG1 < CG2 < CG1*3 |
| Condition 3: CG1 < CG3 < CG2 | Condition 4: CG4 < CG1 < CG4*2 |
| Condition 5: CT3 < CG2 | Condition 6: CT2*2 < CG2 |
| Condition 7: (CT1+CT2) < CT4 < CG2 | |

Here, the difference between the maximum center distance and the minimum center distance may be 5 mm or more, for example, in the range of 5 mm to 20 mm. In addition, by providing the maximum center distance between the lenses to be greater than the maximum center thickness of each lens, a receiving optical system in which the center distance between the spherical lens and the aspherical lens does not increase can be provided. In addition, since the maximum center distance between the lenses is provided to be twice as large as the minimum center thickness of each lens, the optical path can be controlled.

The effective diameter of each lens may satisfy the following condition.

| | |
|---|---|
| Condition 1: CA12 < CA11 < CA12*2 | Condition 2: CA2 < CA1 |
| Condition 3: CA1 < CA3 | Condition 4: 0.5 < CA21/CA22 < 1.5 |
| Condition 5: 0.5 < CA3/CA4 < 1.5 | Condition 6: 0.5 < CA32/CA31 < 1.5 |
| Condition 7: 0.5 < CA41/CA42 < 1.5 | Condition 8: 0.5 < CA51/CA52 < 1.5 |
| Condition 9: CA5 < CA4 | |

The lens having the maximum effective diameter may be the third lens 113. The lens surface having the maximum effective diameter may be the sixth surface S6 of the third lens 113. The lens having the minimum effective diameter may be the second lens 112. The lens surface having the minimum effective diameter may be the tenth surface S10 of the fifth lens 115, and may be less than 75% of the sixth surface S6. The effective diameter of each of the first to fifth lenses 111-115 may be greater than the diagonal length of the effective region of the sensing portion 151. The fifth lens 115 has an aspherical surface and may guide light incident through the fourth lens 114, which is a spherical lens, to the entire region of the sensing portion 151.

FIG. 7 is an example of lens data of the optical system of the embodiment of FIG. 6. As in FIG. 7, the radius of curvature of the optical axis OA of the first to fifth lenses 111, 112, 113, 114, and 115, the center thickness CT of the lenses, the center distance CG between the lenses, the refractive index at the d-line, the Abbe number, and the size of the effective diameter may be set. As shown in FIG. 8, among the lenses of the embodiment of FIG. 6, the lens surfaces of the second and fifth lenses 112 and 115 may include aspherical surfaces having a radius of curvature R, a conic constant K, and a 14th-order aspherical coefficient A-E. For example, the object-side and sensor-side surfaces of the second and fifth lenses 112 and 115 may be lens surfaces having a 14th-order aspherical coefficient. The focal lengths F1 and F2 of the first and second lenses 111 and 112 may have negative refractive power, and the focal lengths F3, F4 and F5 of the third, fourth, and fifth lenses 113, 114 and 115 may have positive refractive power. The refractive powers F1-F5 and the total focal length F of each lens may satisfy the following conditions.

| | |
|---|---|
| Condition 1: \|F1\| < \|F2\| | Condition 2: \|F2\| < F3 |
| Condition 3: 0.5 < F3/\|F2\| < 1.5 | Condition 4: F5 < F4 |
| Condition 5: F < F5 | Condition 6: F < \|F1\| |
| Condition 7: F < BFL | |

Here, the focal length of the fourth lens 114 is the maximum among the lenses, and may be 45 mm or more and 100 mm or less. Accordingly, it may have improved MTF characteristics, aberration control characteristics, resolution characteristics, etc. in the field of view range set in the optical system, and may have good optical performance in the periphery of the field of view. In addition, the composite focal length may satisfy the following conditions.

| | |
|---|---|
| Condition 1: \|F12\| < F35 (F12 < 0) | Condition 2: F45 < \|F13\|(F13 < 0) |
| Condition 3: F < F24 < F3 | |

TTL and FOV may satisfy the following conditions.$CA 11 * 2 < TTL$$F 4 < TTL$$0.5 < TTL / FOV < 1.5$

FIG. 9 is a graph showing the diffraction MTF in the optical system of FIG. 6, and is a graph showing the modulation of brightness according to the spatial frequency. That is, FIG. 9 shows the diffraction MTF at room temperature, and is a graph measuring the modulation of brightness according to the position of the defocusing position.

FIG. 10 is a graph showing the aberration characteristics in the optical system of FIG. 6. The graph of FIG. 10 is a graph measuring longitudinal spherical aberration, astigmatic field curves, and distortion from left to right. In FIG. 10, the X-axis can represent the focal length (mm) and distortion (%), and the Y-axis can represent the height of the image. In addition, the graph for spherical aberration is a graph for light in wavelength bands of about 930 nm, about 940 nm, and about 950 nm, and the graphs for astigmatic aberration and distortion aberration are graphs for light in wavelength bands of about 940 nm. In the aberration diagram of FIG. 10, the closer each curve at room temperature is to the Y-axis, the better the aberration correction function can be interpreted. That is, the optical system 100 according to the embodiment can have improved resolution and good optical performance in the center and periphery of the FOV.

The optical system 100 according to the first and second embodiments generates chromatic aberration and can correct chromatic aberration using spaced aspherical lenses. The lens repeatedly contracts and expands as the temperature changes from low to high temperatures. Since the lens characteristics of lenses of the same material change the same amount according to the temperature change, it is effective to correct chromatic aberration between lenses of the same material even when the temperature changes. In addition, the optical system 100 can compensate for temperature for aspherical lenses even if it uses at least one or two or more aspherical lenses, and can prevent deterioration of reliability of optical characteristics. The optical system of the above-described embodiments can effectively control aberration characteristics such as chromatic aberration and distortion aberration, and can have good optical performance at the center and periphery of the FOV.

The receiving optical system according to the first and second embodiments of the invention can prevent deterioration of optical performance from low to high temperatures by considering the characteristics of the vehicle optical system. For example, after designing a lens at room temperature, the value of dn/dt, which is a temperature-dependent refractive index change coefficient, is assembled by considering the power combination of each lens, and the value of the temperature coefficient (dn/dt) according to the refractive index of the lens and the defocus for the thickness variable at low, room, and high temperatures may be set to 5µm or less. To this end, the first, third, and fourth lenses are made of spherical glass, and the second and fifth lenses are made of aspherical glass. The existing filter is disposed between the sensing portion and the last lens. In an embodiment of the invention, the optical filter 155 may be arranged close to the aperture stop ST, that is, between the aperture stop ST and the third lens 103 and 113. Accordingly, the incident angle of light incident on the optical filter 155 may be minimized. The angle of incidence (AOI) of the main beam at the incident surface of the optical filter 155 may be less than 20 degrees, for example, 0.6 degrees or less, at 0 field (0 F) as inspected by AOI equipment, and the angle of incidence of the main beam at the image sensor may be 50 degrees or less. Accordingly, the problem of the angle of incidence of the main beam shifting may be minimized.

The optical system 100 according to the embodiment disclosed above may satisfy at least one or two or more of the equations described below. Accordingly, the optical system 100 according to the embodiment may have improved optical characteristics. For example, when the optical system 100 satisfies at least one equation, the optical system 100 may effectively control aberration characteristics such as chromatic aberration and distortion aberration, and may have good optical performance at the center and periphery of the FOV. In addition, the optical system 100 may have improved resolution. In addition, the thickness of the lens on the optical axis OA described in the equations and the meaning of the distance of the adjacent lenses on the optical axis OA may be referred to the above-described embodiments.$0 < CT 1 / CT 2 < 3$

In equation 1, by setting the center thickness CT1 of the first lens 101 and 111 and the center thickness CT2 of the second lens 102 and 112, the rigidity of the first lens 101 and 111 can be prevented from being deteriorated and the factors affecting the aberration can be controlled. Preferably, equation 1 may satisfy: 1 < CT1 / CT2 < 2 (first embodiment) or 0.5 < CT1 / CT2 < 1 (second embodiment).$3 < CA 11 / CT 1$

In equation 2, the center thickness CT1 of the first lens 101 and 111 and the effective diameter CA11 of the object-side surface S1 of the first lens 101 and 111 may be set, and if this is satisfied, the strength and optical characteristics of the glass lens can be prevented from being deteriorated. If it is lower than the range of equation 1, the lens may be damaged or the incident efficiency may be reduced, and if it is larger than the above range, the TTL may increase and the weight of the optical system may become heavier. Preferably, equation 2 may satisfy: 3 < CA11/CT1 < 10 (first embodiment) or 10 < CA11/CT1 < 25 (first embodiment).$0 < CT 5 / CT 4 < 2$

In equation 3, the center thickness CT5 of the fifth lens 105 and 115 and the center thickness CT4 of the fourth lens 104 and 114 can be set, so that thermal compensation can be optimized according to temperature changes from low to high temperatures, and optical performance degradation can be prevented. Preferably, equation 3 may satisfy: 0.5 < CT5 / CT4 < 1.5.$0 < CT 5 / \left(CT1+CT2\right) < 2.5$

In equation 4, the center thickness CT5 of the fifth lens is set to be 0.5 times greater than the sum of the center thicknesses CT1 and CT2 of the first and second lenses, so that light refracted from the fifth lens 105 and 115 may be guided to the sensing portion 151. Preferably, the equation 4 may satisfy: 0.5 < CT5/(CT1+CT2) < 1.5 (first embodiment) or 1 < CT5/(CT1+CT2) < 2.5 (second embodiment). Accordingly, the center thickness CT5 of the fifth lens 105 and 115 closest to the sensing portion 151 may be set to be thicker than the center thickness CT1 of the first lens 101 and 111, and the effective diameter may be set to be smaller than the effective diameter of the first lens.$1 < CG 3 / CT 2 < 5$

In equation 5, the center distance CG3 between the third and fourth lenses may be set to be larger than the center thickness CT2 of the second lens. Accordingly, the third lens 103 and 113 can secure a space for installing an optical filter 155 between the convex sensor-side surface and the convex object-side surface of the fourth lens 104 and 114. The effective diameter of the third lens 103 may be set to be larger than the effective diameter of the second lens 102. Preferably, the equation 5 may satisfy: 2 < CG3 / CT2 < 3.$0 < CG 4 / CG 1 < 1$

In equation 6, by setting the center distance CG1 between the first and second lenses and the center distance CG4 of the fourth and fifth lenses, the center distances between the spherical lens and the aspherical lens may be set. Preferably, 0.3 < CG4 / CG1 < 1 may be satisfied.$0 < CG 4 / CG 2 < 1$

In equation 6-1, by setting the center distance CG2 between the second and third lenses to be greater than the center distance CG4 of the fourth and fifth lenses, the center distance CG2 between the two lenses adjacent to the object side of the aperture stop ST may be set to be greater than the center distance CG4 between the two lenses located on the sensor side of the aperture stop ST. Accordingly, the light paths on the incident side and the output side of the aperture stop ST may be adjusted. Preferably, the equation 6-1 may satisfy: 0.1 < CG4 / CG2 < 0.5.$5 < CG 3 / OFt$

In equation 7, OFt is a thickness of the optical filter 155, and may be smaller than the center distance CG3 between the third and fourth lenses. In equation 7, the space in which the optical filter 155 may be installed may be secured by the center distance CG3 between the third and fourth lenses 103 and 104. Preferably, the equation may satisfy: 5 < CG3 / OFt < 15.$CG 1 < CG 3 < CG 2$

In equation 8, the center distances CG1, CG2 and CG3 between the first to fourth lenses may be set. Accordingly, the first lens 101 has a convex meniscus shape toward the object, and the second lens 102 provides a concave shape on both sides, so that the gaps may be set.$5 < TTL / CT _ AVER < 25$

In Equation 9, CT_AVER is an average of the center thicknesses of the first to fifth lenses, and can set the total optical axis length (TTL) and the center thickness of the lenses. Accordingly, the center thicknesses of 6 or less glass lenses according to the optical axis length may be set.$1.70 < Nd 1$

Nd1 is the refractive index of the d-line of the first lens 101 and 111. In equation 10, by setting the refractive index of the first lens 101 and 111 high, the factor affecting the reduction of the third aberration (Seidel aberration) of the optical system can be adjusted, and the aberration that may occur when the TTL is somewhat longer can be reduced. Equation 10 preferably satisfies 1.75 < Nd1 < 2.1. If it is designed to be lower than the lower limit of equation 10, the performance of reducing aberration can be obtained, and since the refractive power of the first lens is weakened, light cannot be collected efficiently, and the performance of the optical system can be degraded. If it is designed to be higher than the upper limit of equation 10, there is a disadvantage in that it is difficult to obtain materials. In addition, if the refractive index of the first lens 101 and 111 is designed to be lower than the lower limit of equation 10, the radius of curvature of the first and second lenses can be increased in order to increase the refractive power of the first and second lenses.$1.72 \leq Aver \left(Nd1:Nd5\right) \leq 1.80$

Aver(Nd1:Nd5) is an average of the refractive index values of the d-line of the first to fifth lenses. When equation 10-1 is satisfied, the optical system 100 can set the resolution and suppress the influence on TTL.$GM _ Nd _ Aver < GL _ Nd _ Aver$

GL_Nd_Aver is an average of the refractive index values of the d-line of the spherical glass lenses, and GM_Nd_Aver is an average of the refractive index values of the d-line of the aspherical glass lenses, which are glass molds. The spherical lens is a lens made of a glass material that is not injection molded, and the aspherical lens is a lens made of an injection molded glass material. Spherical lenses having high refractive indices are positioned on the object side of the aspherical lens, so that color dispersion can be controlled.$0 < Nd 1 / Nd 3 < 1.5$

Nd1 and Nd3 are the refractive indices of the first and third lenses at the d-line. In the equation 11, the difference in the refractive indices of the first lens and the third lens can be reduced, thereby preventing the degradation of color dispersion by the lenses made of glass. Preferably, the equation 11 may satisfy: Nd1 < Nd3.$1 < Nd 3 / Nd 2 < 1.5$

Nd3 and Nd4 are the refractive indices of the second and third lenses at the d-line. In the equation 12, the refractive indices of the third lens are set higher than the refractive indices of the second lens, so that color dispersion by the lenses made of spherical materials and color dispersion by the aspherical lenses can be controlled. Preferably, the equation 12 may satisfy: 1 < Nd3/Nd2 < 1.3.$\left(Vd4*Nd4\right) < \left(Vd2*Nd2\right)$

Vd2 and Vd4 are Abbe numbers of the second and fourth lenses. In the equation 13, the product of the refractive index and the Abbe number of the second lens 102 is set to be higher than the product of the refractive index and the Abbe number of the fourth lens 104, so that the color dispersion by the spherical material lens and the color dispersion by the aspherical lens can be controlled.$\left(Vd3*Nd3\right) < \left(Vd5*Nd5\right)$

Vd3 and Vd5 are Abbe numbers of the third and fifth lenses. In Equation 13-1, the product of the refractive index and the Abbe number of the fifth lens 105 is set to be greater than the product of the refractive index and the Abbe number of the third lens 103, so that the color dispersion by the spherical material lens and the color dispersion by the aspherical lens can be controlled.$2 < D 1 / BFL < 6$

BFL is an optical axis distance from the surface of the sensing portion 151 to the center of the sensor-side surface of the last lens, i.e., the fifth lens 105, and D1 is an optical axis distance from the surface of the sensing portion 151 to the sensor-side surface of the optical filter 155. By satisfying Equation 14, the optical filter 155 may be disposed adjacent to the aperture stop ST or positioned between lenses closer to the object side than the last lens.$1 < SD / D 1 < 1.2$

SD is a distance in the optical axis direction from the aperture stop ST to the surface of the sensing portion 151. If equation 14-1 is satisfied, the optical filter 155 may be disposed closer to the sensor side than the aperture stop ST.$0.5 < BFL / CG 3 < 1.5$

If equation 14-2 is satisfied, the optical filter 155 is placed within the gap between the third and fourth lenses, and the optical axis distance (BFL) between the last lens and the sensing portion can be increased.$CT 5 * 3 < D 1 < CT 5 * 5$

In equation 15, the optical axis distance D1 from the surface of the sensing portion 151 to the sensor-side surface of the optical filter 155 may be set to be 3 times greater than the center thickness CT5 of the fifth lens 105 and 115. Accordingly, the incident angle of the main beam incident on the optical filter 155 may be reduced to less than 20 degrees, and the problem of the incident angle shifting at low and high temperatures compared to room temperature may be minimized. Here, the center thickness CT5 of the fifth lens may be greater than the total focal length F. That is, F < CT5 is satisfied. $0.5 < D 1 / D 2 < 1.5$

D2 is an optical axis distance from the center of the object-side surface of the first lens 101 to the object-side surface of the optical filter 155. If equation 16 is satisfied, the optical filter 155 may be disposed between the lenses, or may be placed between the third and fourth lenses, or may be disposed at a position adjacent to the aperture stop ST. Accordingly, the incident angle of the main beam incident on the optical filter 155 may be reduced to less than 20 degrees, and the problem of the incident angle shifting at low and high temperatures compared to room temperature may be minimized. Preferably, D1 < D2 may be satisfied.$0.5 < D 1 / CA_Max < 1.5$

CA_Max is the maximum effective diameter among the object-side surface and the sensor-side surface of the lenses. Equation 17 may set the position and maximum effective diameter of the optical filter. Preferably, equation 17 may satisfy 1 < D1/CA_Max < 1.5.$1 < CA 11 / CA 21 < 5$

CA11 means the effective diameter of the first surface S1 of the first lens 101, and CA21 means the effective diameter of the third surface S3 of the second lens 102. When equation 18 is satisfied, the optical system 100 can control the incident light and set the factor affecting the aberration, and preferably, 1 < CA11 / CA21 < 2.5 may be satisfied.$0 < CA 22 / CA 31 < 2$

CA22 means the effective diameter of the fourth surface S4 of the second lens, and CA31 means the effective diameter of the fifth surface S5 of the third lens. When equation 19 is satisfied, the optical system 100 can control the incident light path and set the sensor-side surface of the second lens to a concave shape. Preferably, equation 19 may satisfy 0.5 < CA22 / CA31 < 1.$0.5 < CA 42 / CA 51 < 2$

CA42 means the effective diameter of the eighth surface S8 of the fourth lens, and CA51 means the effective diameter of the ninth surface S9 of the fifth lens. When equation 20 is satisfied, the optical system 100 can set the light path incident to the sensing portion 151 through the fourth lens 104 and the fifth lens 105. Equation 20 can preferably satisfy: 1 < CA42 / CA51 < 1.5.$1 < CA 11 / CA 52 < 5$

CA11 is an effective diameter of the first surface S1 of the first lens, and CA52 means an effective diameter of the tenth surface S10 of the fifth lens. When the optical system 100 satisfies equation 21, the incident amount of the first lens, which is a spherical lens, can be increased and the path of light toward the sensing portion may be set through the last lens, which is an aspherical lens. Equation 21 can preferably satisfy: 1 < CA11 / CA52 < 2.5.$50 < TTL / Nd 1 < 100$

In equation 22, the total optical axis length (TTL) and the refractive index of the first lens may be set. When equation 22 is satisfied, the total optical axis length may be set to exceed 50 times the refractive index of the first lens. Preferably, Equation 22 may satisfy: 55 < TTL / Nd1 < 90.$20 < CA 11 / Nd 1 < 40$

In Equation 23, the effective diameter of the first surface S1 on the object side of the first lens and the refractive index of the first lens may be set. If Equation 23 is satisfied, the effective diameter of the first surface may be set to be 20 times greater than the refractive index of the first lens. Preferably, Equation 23 may satisfy: 24 < CA11 / Nd1 < 35.$1 < CG_Max / CG 4 < 5$

CG_Max means the maximum center distance between lenses in the optical system. If Equation 24 is satisfied, the maximum center distance between the lenses is disposed on the object side more than the position between the fourth lens and the fifth lens, and the size of the fifth lens may be suppressed from increasing. Preferably, the following equation may satisfy: 2 < CG_Max / CG4 < 4.$0.5 < CT 5 / BFL < 2$

In Equation 25, when the center thickness of the fifth lens and the optical axis distance (BFL) between the fifth lens and the sensing portion 151 are satisfied, the incident light may be transmitted to the entire region of the sensing portion 151 by the fifth lens. Preferably, the following equation may satisfy: 0.7 < CT5 / BFL < 1.5.$3 < TTL / Max_CG < 9$

In Equation 26, the total optical axis length (TTL) may be set to be three times more than the maximum distance Max_CG among the center distances between the lenses. Accordingly, the maximum center distance may be set within the total optical axis length. Preferably, Equation 26 may satisfy: 4 < TTL / Max_CG < 7.5.$5 < TTL / Max_CT < 12$

In equation 27, the total optical axis length (TTL) may be set to be 5 times more than the maximum thickness Max_CT among the center thicknesses of the lenses. Accordingly, the maximum center thickness of the lenses may be set within the total optical axis length. Preferably, equation 27 may satisfy: 6 < TTL / Max_CT < 11.$5 < \left|L5R2\right| / CT 5$

L5R2 is the radius of curvature of the sensor-side surface of the fifth lens. When equation 28 is satisfied, the refractive power of the fifth lens 105 and 115 may be controlled and the optical performance may be improved. Preferably, the following equation may satisfy: 7 < |L5R2| / CT5 < 20 (first embodiment) or 100 < |L5R2| / CT5 (second embodiment).$3 < \left|L5R2\right| / L 5 R 1$

If Equation 29 is satisfied, the refractive power of the fifth lens 105 and 115 may be controlled and the optical performance may be improved.$10 < L 1 R 1 / L 1 R 2 < 70$

L1R1 is the radius of curvature of the object-side surface of the first lens, and L1R2 is the radius of curvature of the sensor-side surface of the first lens. If Equation 30 is satisfied, the refractive power of the first lens 101 and 111 may be controlled and the optical performance may be improved. Preferably, 20 < L1R1 / L1R2 < 50 may be satisfied.$0 < \left|L2R1/L2R2\right| < 2$

L2R1 is the radius of curvature of the object-side surface of the second lens, and L2R2 is the radius of curvature of the sensor-side surface of the second lens. When equation 31 is satisfied, the refractive power of the second lens 102 and 112 may be controlled to improve the optical performance, and the effective diameter of the sensor-side lenses of the second lens 102 and 112 may be adjusted. Preferably, equation 31 may satisfy: 1 < |L2R1 / L2R2| < 1.5 (first embodiment) or 0 < |L2R1 / L2R2| < 1 (second embodiment).$0 < CT_Max / CG_Max < 2$

In equation 32, the maximum center thickness CT_Max among the lenses and the maximum center distance CG_Max between adjacent lenses may be set. If equation 32 is satisfied, the optical system can have good optical performance at the focal length of the set field of view and can reduce TTL. Preferably, equation 32 may satisfy: 0.4 < CT_Max / CG_Max < 1.$0 < ΣCT / ΣCG < 2$

ΣCT is the sum of the center thicknesses of the lenses, and ΣCG is the sum of the ditances between adjacent lenses. If equation 33 is satisfied, the optical system can have good optical performance at the focal length of the set field of view and can reduce TTL. Here, the first embodiment may satisfy: ΣCT > ΣCG, and the second embodiment may satisfy: ΣCT < ΣCG.$5 < ΣNd < 15$

ΣNd means the sum of the refractive indices at the d-line of each of the plurality of lenses. If equation 34 is satisfied, TTL can be controlled in an optical system 100 in which aspherical lenses and spherical lenses are mixed, and improved resolution can be achieved. In addition, if the number of spherical lenses is greater than the number of aspherical lenses, the sum of TTL and refractive indices may be set. Equation 34 preferably satisfies: 7 < ΣNd < 10.$10 < ΣVd / ΣNd < 50$

Σ Vd means the sum of Abbe numbers of each of the plurality of lenses. If equation 35 is satisfied, the optical system 100 can have improved aberration characteristics and resolution. By setting the sum of Abbe numbers and the sum of refractive indices of the lenses in equation 35, optical characteristics can be controlled, and the following equation may preferably satisfy: 15 < ΣVd / ΣNd < 25.$200 < ΣCT * n < 450$

ΣCT is the sum of the center thicknesses of multiple lenses, and n is the number of lenses in the optical system. If equation 36 is satisfied, TTL can be controlled. Preferably, 200 < ΣCT*n < 350 may be satisfied.$1 < CA 11 / CA_Min < 3$

CA_Min means the minimum effective diameter among the object-side surfaces and the sensor-side surfaces of the lenses. If equation 37 is satisfied, the optical system can control the incident light and maintain the optical performance. Equation 38 can preferably satisfy: 1 < CA11 / CA_Min < 3.$1 < CA_Max / CG_Max < 4$

CA_Max means the maximum effective diameter among the lens surfaces, and CG_Max means the maximum center distance among the lenses. If equation 38 is satisfied, the maximum center distance is arranged within the above range based on the maximum effective diameter, so that the TTL may be reduced. Preferably, the following equation may satisfy: 1.5 < CA_Max / CG_Max < 3.5.$0.5 < CA_Max / D 2 < 1.5$

If equation 39 is satisfied, the position of the optical filter 155 may be set based on the separation distance from the first lens 101 and 111 and the maximum effective diameter of the lens surfaces. Preferably, the following equation may satisfy: 0.5 < CA_Max / D2 < 1.$1 < TTL / D 1 < 3$

In equation 40, the total optical axis length (TTL) of the optical system may be set to be less than 3 times the optical axis distance D1 between the optical filter 155 and the sensing portion, so that the position of the optical filter 155 may be set.$1 < CA_Max / \left(2*ImgH\right) < 5$

In equation 42, the maximum effective diameter CA_Max of the lens surface may be set to the diagonal length (2*ImgH) of the sensing portion 151, and if this is satisfied, the optical system can set a sensor device that can maintain good optical performance. Equation 41 can preferably satisfy: 2 < CA_Max / (2*ImgH) < 4.$1 < TD / CA _ Max < 4$

TD is the optical axis distance from the center of the object-side surface of the first lens to the center of the sensor-side surface of the last lens. If equation 42 is satisfied, the total optical axis distance TD and the maximum effective diameter of the lenses may be set, so that the size for good optical performance may be set. Equation 42 can preferably satisfy: 1 < TD / CA_Max < 3.$SD < TD$

The SD is the optical axis distance from the position of the aperture to the surface of the sensing portion.$0 < F / \left|L5R2\right| < 0.5$

F is the effective focal length of the optical system, and L5S2 is the radius of curvature of the sensor-side surface of the fifth lens. If equation 43 is satisfied, the effect on optical system reduction, such as TTL, can be controlled by setting the effective focal length and the radius of curvature of the sensor-side surface of the last aspherical lens. Equation 43 can preferably satisfy: 0 < F / |L5R2| < 0.2.$0 < F / L 1 R 1 < 0.5$

In equation 44, the effective focal length of the optical system and the radius of curvature of the object-side surface of the first lens are set, so that the influence on the incident light and the TTL can be controlled. Preferably, equation 44 may satisfy: 0 < F / L1R1 < 0.2.$0 < EPD / \left|L5R2\right| < 0.5$

EPD means the size of the entrance pupil diameter of the optical system 100. When the optical system 100 according to the embodiment satisfies equation 45, the optical system 100 can control the incident light. Preferably, the following condition may satisfy: 0 < EPD / L5R2 < 0.2.$0 < EPD / L 1 R 1 < 0.5$

In equation 46, the size of the entrance pupil diameter of the optical system 100 and the radius of curvature of the object-side surface of the first lens may be set, and when these are satisfied, the optical system 100 can control the incident light. Preferably, the following condition may satisfy: 0 < EPD / L1R1 < 0.2.$1 < \left|F1\right| / F < 5$

F1 is the focal length of the first lens, and F is the total focal length. When equation 47 is satisfied, the power of the first lens may be set to negative for an optical system having a field of view of 110 degrees or more.$1 < \left|F2\right| / F < 10$

F2 is the focal length of the second lens. If equation 48 is satisfied, the power of the second lens for an optical system having a field of view of 110 degrees or more may be set to negative.$1 < F 3 / F < 10$$1 < F 4 / F < 10$$1 < F 5 / F < 6$

In equation 48-1, the incident angle (AOI) of the optical filter and a lens having a small F number may be set. In equation 48-2, the characteristics of lenses having small F numbers may be set, so that the fourth lens 104 and 114 after the aperture stop can have positive refractive power. In addition, equation 48-2 can set the incident angle (AOI) of the optical filter and a lens having a small F number. In Equation 48-3, the characteristics of lenses with small F numbers may be set, and the last lens 105 and 115 adjacent to the sensing portion 151 can have positive refractive power.$0 < \left|F1/F5\right| < 5$

In Equation 49, the focal lengths of the first and fifth lenses may be set, and the refractive powers of the first and fifth lenses may be controlled to improve the resolution. Preferably, the following equation may satisfy: 0 < |F1 / F5| < 1.$\left|F1\right| < F 4$$F 3 < F 4$$F 5 < F 4$

In Equations 49-1 to 49-3, F1, F2, F3, F4, and F5 are the focal lengths of the first to fifth lenses, and by adjusting the focal length of the spherical lens to the focal length of the last aspherical lens, light may be guided to the effective region of the aspherical lens. The balance of each focal length of each lens can suppress the difference in the pint position due to temperature change. Accordingly, the optical characteristics of the imaging lenses may be suppressed from being deteriorated due to temperature change.$0 < F 3 / F 4 < 2$

The third and fourth lenses are provided as spherical lenses having positive power, can improve aberration, and can effectively guide light with the aspherical lens.$80 mm < TTL < 200 mm$

TTL (Total track length) means the distance from the center of the first surface S1 of the first lens 101 and 111 to the image surface of the sensing portion 151 in the optical axis OA. If equation 51 is satisfied, it can be applied to a vehicle optical system having TTL. Equation 51 can preferably satisfy: 100 mm < TTL < 150 mm.$5 mm < ImgH < 20 mm$

Equation 52 can set 1/2 of the diagonal length of the sensing portion 151 and provide an optical system having a vehicle sensor size. Equation 52 can preferably satisfy: 7 mm < ImgH < 15 mm.$5 mm < BFL < 20 mm$

In equation 53, the BFL (Back focal length) is set to exceed 5 mm, thereby securing the installation space of the cover glass 153, improving the assemblability of components through the gap between the sensing portion 151 and the last lens, and improving the joint reliability. Equation 53 preferably satisfies: 8 mm < BFL < 18 mm. When the BFL is less than the range of equation 53, some of the light traveling to the sensing portion may not be transmitted to the sensing portion, which may cause a decrease in resolution. When the BFL exceeds the range of equation 53, stray light may be introduced, which may deteriorate the aberration characteristics of the optical system. $5 mm < F < 20 mm$

Equation 54 can set the total focal length F to suit the vehicle optical system. Equation 54 may satisfy: 5 mm < F < 15 mm.$100 degrees < FOV$

In equation 55, FOV (Field of view) means the angle (Degree) of view of the optical system 100, and a vehicle optical system having FOV exceeding 100 degrees may be provided. Preferably, equation 55 may satisfy: 110 ≤ FOV ≤ 150.

In equation 55, the range of the vehicle optical system may be set by the FOV. The sensor length in the horizontal direction is based on 18 mm ± 0.7 mm. In addition, when equation 55 is satisfied, when the temperature changes from room temperature to high temperature, the change rate of the effective focal length and the change rate of the FOV may be set to 5% or less, for example, 0 to 5%. In addition, even if two or more aspherical lenses are mixed with spherical lenses and used in the optical system 100, the deterioration of optical characteristics may be prevented through temperature compensation and aberration correction by the aspherical lens made of glass.$1 < TTL / Vd 1 < 7$

Equation 56 sets the relationship between the entire optical axis length of the optical system and the Abbe number of the first lens 101 and 111, thereby providing an improved vehicle optical system. Preferably, equation 56 may satisfy 2 < TTL / Vd1 < 5.$10 < TTL / ImgH < 30$

Equation 57 can set the total optical axis length (TTL) of the optical system and the diagonal length (ImgH) from the optical axis of the sensing portion 151. When the optical system 100 according to the embodiment satisfies the equation 57, the optical system 100 can have a TTL for application of the vehicle sensing portion 151, thereby providing a more improved image quality. The equation 57 can preferably satisfy: 10 < TTL / ImgH < 20.$1 < BFL / ImgH < 3$

The equation 58 can set the optical axis distance between the sensing portion 151 and the last lens and the length in the diagonal direction from the optical axis of the sensing portion 151. When the optical system 100 according to the embodiment satisfies the equation 58, the optical system 100 can secure the BFL for application of the size of the vehicle sensing portion 151, set the gap between the last lens and the sensing portion 151, and have good optical characteristics in the center and periphery of the FOV. Equation 58 preferably satisfies: 1 < BFL / ImgH < 2.$ImgH < BFL < D 1$

BFL may be greater than a value (ImgH) which is 1/2 of the diagonal length of the sensing portion 151 and less than the optical axis distance D1 from the optical filter 155 to the surface of the sensing portion 151. In addition, the following condition may satsify: ImgH < BFL < ImgH*2.$6 < TTL / BFL < 15$

Equation 59 may set the total optical axis length (TTL) of the optical system and the optical axis distance (BFL) between the sensing portion 151 and the last lens. When the optical system 100 according to the embodiment satisfies equation 59, the optical system 100 may secure BFL. Equation 59 may preferably satisfy: 7 < TTL / BFL < 12.$0 < F / TTL < 0.5$

Equation 60 can set the total focal length (F) and the total optical axis length (TTL) of the optical system 100. Accordingly, an optical system for a driver assistance system may be provided. Equation 60 may satisfy: 0 < TTL/F < 0.2. When the optical system 100 according to the embodiment satisfies Equation 60, the optical system 100 can have an appropriate focal length and a wide field of view in the set TTL range, and provides an optical system that can maintain an appropriate focal length and form an image even when the temperature changes from low to high. When it is less than the lower limit of Equation 60, it is necessary to increase the refractive power of the lenses, making it difficult to correct spherical aberration or distortion aberration, and when it exceeds the upper limit of Equation 60, the effective diameter or TTL of the lenses becomes longer, which can cause a problem of the imaging lens system becoming larger.$0 < F / BFL < 2$

Equation 61 can set the total focal length (F) of the optical system 100 and the optical axis distance BFL between the sensing portion 151 and the last lens. When the optical system 100 according to the embodiment satisfies equation 61, the optical system 100 can have a set angle of view and an appropriate focal length, and a vehicle optical system may be provided. In addition, the optical system 100 can minimize the gap between the last lens and the sensing portion 151, so that it can have good optical characteristics in the periphery of the FOV. Equation 61 can preferably satisfy: 0.4 < F / BFL < 1.$0.5 < F / ImgH < 1.5$

Equation 62 can set the total focal length (F) of the optical system 100 and the diagonal length (ImgH) from the optical axis of the sensing portion 151. This optical system 100 can have improved aberration characteristics in the size of the vehicle sensing portion 151. Equation 62 can preferably satisfy: 0.8 < F / ImgH < 1.4 or 1 < F / ImgH < 1.4.$0.5 < F / EPD < 1.5$

Equation 63 can set the total focal length (F) and the entrance pupil diameter of the optical system 100. Accordingly, the optical system has a small F number, so that the overall brightness may be controlled. Equation 63 preferably satisfies: 0.5 < F / EPD < 1.$100 < TTL / F # < 250$

Equation 64 can set the F number (F#) and the entire optical axis length. Accordingly, the entire size and brightness of the optical system may be controlled. Equation 64 preferably satisfies: 120 < TTL / F# < 220.$100 < FOV / F # < 250$

Equation 65 can set the relationship between the FOV of the optical system and the F number F#. Equation 65 may satisfy: 120 < FOV / F# < 220. Here, F# is provided as 1.2 or less or 1 or less, so as to provide a bright image.$120 < \left(CT_Max+CG_Max\right) * n < 250$

Preferably, equation 66 can set the maximum of the center thicknesses of each lens, the maximum of the center distances between adjacent lenses, and the number (n) of lenses, and may satisfy the condition: 150 < (CT_Max+CG_Max)*n < 230.$15 < TTL / n < 40$

Preferably, equation 67 can set the number (n) of lenses according to the total optical axis length, and may satisfy the condition: 20 < TTL/n < 30.$0.5 < FOV < TTL < 1.5$

In equation 68, if the FOV and the total optical axis length (TTL) of the optical system are satisfied, the optical axis length of the optical system having a FOV of 110 degrees or more may be set. Accordingly, the chromatic aberration, resolution, size, etc. of an optical system having 6 or less lenses may be controlled.$Z = \frac{{cY}^{2}}{1 + \sqrt{1 - \left(1+K\right) {c}^{2} {Y}^{2}}} + {AY}^{4} + {BY}^{6} + {CY}^{8} + {DY}^{10} + {EY}^{12} + {FY}^{14} + ⋯$

In equation 69, Z may mean Sag, a distance in the direction of an optical axis from an arbitrary position on an aspherical surface to a vertex of the aspherical surface. The Y may mean a distance in a direction perpendicular to the optical axis from an arbitrary position on an aspherical surface to the optical axis. The c may mean a curvature of a lens, and K may mean a conic constant. In addition, A, B, C, D, E, and F may mean aspheric coefficients.

The optical system 100 according to the embodiment may satisfy at least one or two or more equations among equations 1 to 68. In this case, the optical system 100 may have improved optical characteristics. In detail, when the optical system 100 satisfies at least one of equations 1 to 34 and/or at least one of equations 35 to 68, the optical system 100 has improved resolution and can improve aberration and distortion characteristics. In addition, the optical system 100 can secure the BFL for applying a vehicle sensing portion 151, can compensate for optical characteristic degradation due to temperature change, and can minimize the gap between the last lens and the sensing portion 151, thereby having good optical performance at the center and periphery of the FOV.

Table 1 shows the items of the equations described above in the optical system 100 of the embodiment, including the TTL (mm), BFL (mm), effective focal length F, ImgH (mm), effective diameter (mm), the sum of the center thicknesses of each lens, the sum of the center distances between adjacent lenses, the sum of the Abbe numbers, the sum of the refractive indices, the optical axis distance TD (mm) from the first surface S1 to the tenth surface S10, the focal lengths F1, F2, F3, F4, and F5 of each of the first to fifth lenses, the composite focal length, FOV, edge thickness ET, F number, etc. of the optical system 100.

**[Table 1]**

| Items | First embodiment | Second embodiment |
|---|---|---|
| F(EFL) | 10.000 | 10.000 |
| F1 | -33.935 | -36.333 |
| F2 | -51.021 | -47.966 |
| F3 | 53.294 | 55.919 |
| F4 | 77.816 | 58.938 |
| F5 | 38.020 | 42.701 |
| ΣNd | 8.885 | 8.842 |
| ΣVd | 190.079 | 179.859 |
| ΣCT | 61.195 | 51.705 |
| ΣCG | 54.189 | 54.753 |
| TTL | 130.537 | 121.244 |
| F# | 0.803 | 0.7000 |
| ET1 | 16.1284 | 10.6571 |
| ET2 | 12.8334 | 12.4082 |
| ET3 | 9.5422 | 4.3606 |
| ET4 | 9.3792 | 7.1264 |
| ET5 | 9.9420 | 10.9750 |
| FOV | 130.000 | 130.000 |
| EPD | 12.461 | 14.286 |
| BFL | 15.153 | 12.489 |
| TD | 115.384 | 108.755 |
| ImgH | 9.070 | 9.129 |
| SD | 49.166 | 52.414 |
| F12 | -17.5 | -18.0 |
| F35 | 28.8 | 28.3 |
| F24 | 33.0 | 28.4 |

Table 2 shows the result values for the equations 1 to 34 described above in the optical system 100 of the embodiment. Referring to Table 2, it may be seen that the optical system 100 satisfies at least one, two or more, or three or more of the equations 1 to 34. Accordingly, the optical system 100 can have good optical performance and excellent optical characteristics at the center and periphery of the FOV.

**[Table 2]**

| Equations | | First embodiment | Second embodiment |
|---|---|---|---|
| 1 | 0 < CT1 / CT2 < 3 | 1.491 | 0.678 |
| 2 | 3 < CA11 / CT1 | 6.351 | 17.260 |
| 3 | 0 < CT5 / CT4 < 2 | 1.000 | 0.896 |
| 4 | 0.5 < CT5 / (CT1+CT2) < 2.5 | 0.997 | 2.021 |
| 5 | 1 < CG3 / CT5 < 5 | 2.380 | 2.749 |
| 6 | 0 < CG4 / CG1 < 1 | 0.541 | 0.719 |
| 7 | 5 < CG3 / OFt | 9.580 | 12.091 |
| 8 | CG1 < CG3 < CG2 | Satisfaction | Satisfaction |
| 9 | 5 < TTL/CT_AVER < 25 | 10.666 | 11.725 |
| 10 | 1.70 < Nd1 | 1.800 | 1.760 |
| 11 | 0 < Nd1/Nd3 <1.5 | 0.974 | 0.954 |
| 12 | 1 < Nd3/Nd2 <1.5 | 1.167 | 1.161 |
| 13 | (Vd4*Nd4) < (Vd2*Nd2) | Satisfaction | Satisfaction |
| 14 | 2 < D1 / BFL < 6 | 4.146 | 5.116 |
| 15 | (CT5*3) < D1 < (CT5*5) | Satisfaction | Satisfaction |
| 16 | 0.5 < D1 / D2 < 1.5 | Satisfaction | Satisfaction |
| 17 | 0.5 < D1/CA_Max < 1.5 | 1.105 | 1.195 |
| 18 | 1 < CA11 / CA21 < 5 | 1.618 | 1.361 |
| 19 | 0 < CA22 / CA31 < 2 | 0.755 | 0.676 |
| 20 | 0.5 < CA42 / CA51 < 2 | 1.071 | 1.194 |
| 21 | 1 < CA11/CA52 < 5 | 1.607 | 1.514 |
| 22 | 50 < TTL/Nd1 < 100 | 72.540 | 68.870 |
| 23 | 20 < CA11/Nd1 < 40 | 31.586 | 29.251 |
| 24 | 1 < CG_Max / CG4 < 5 | 3.010 | 3.280 |
| 25 | 0.5 < CT5 / BFL < 2 | 0.984 | 1.194 |
| 26 | 3 < TTL / Max_CG < 9 | 6.368 | 4.914 |
| 27 | 5 < TTL / Max_CT < 12 | 7.956 | 9.505 |
| 28 | 5 < \|L5R2\| / CT5 | 9.982 | 255.443 |
| 29 | 3 < \|L5R2\| / L5R1 < 10 | 4.132 | 111.941 |
| 30 | 10 < L1R1 / L1R2 < 70 | 28.357 | 28.845 |
| 31 | 0 < \|L2R2 / L2R1\| <2 | 1.425 | 0.418 |
| 32 | 0 < CT_Max / CG_Max < 2 | 0.800 | 0.675 |
| 33 | 0 < ∑CT / ∑CG < 2 | 1.129 | 0.944 |
| 34 | 5 < ∑Nd <15 | 8.885 | 8.842 |

Table 3 shows the result values for the equations 35 to 68 described above in the optical system 100 of the embodiment. Referring to Table 3, it may be seen that the optical system 100 satisfies at least one, two or more, or three or more of the equations 35 to 68. Accordingly, the optical system 100 can have good optical performance and excellent optical characteristics at the center and periphery of the FOV.

**[Table 3]**

| Equations | | First embodiment | Second embodiment |
|---|---|---|---|
| 35 | 10 < ∑Vd / ∑Nd <50 | 21.393 | 20.342 |
| 36 | 200 < ∑CT*n < 450 | 305.976 | 258.526 |
| 37 | 1 < CA11 / CA_Min < 3 | 1.692 | 1.514 |
| 38 | 1 < CA_Max / CG_Max < 4 | 2.773 | 2.167 |
| 39 | 0.5 < CA_Max / D2 < 1.5 | 0.858 | 0.949 |
| 40 | 1 < TTL / D1 < 3 | 2.078 | 1.898 |
| 41 | 1 < CA_Max / (2*ImgH) < 5 | 3.133 | 2.928 |
| 42 | 1 < TD / CA_Max < 4 | 2.030 | 2.034 |
| 43 | 0 < F / \|L5R2\| < 0.5 | 0.067 | 0.003 |
| 44 | 0 < F / L1R1 < 0.5 | 0.014 | 0.013 |
| 45 | 0 < EPD / \|L5R2\|< 0.5 | 0.084 | 0.004 |
| 46 | 0 < EPD / L1R1 < 0.5 | 0.017 | 0.019 |
| 47 | 1 < \|F1\| / F < 5 | 3.393 | 3.633 |
| 48 | 1 < \|F2\| / F < 10 | 5.102 | 4.797 |
| 49 | 0 < \|F1 / F5\| < 3 | 0.893 | 0.851 |
| 50 | 0 < F3 / F4 < 2 | 0.685 | 0.949 |
| 51 | 80 < TTL < 200 | 130.537 | 121.244 |
| 52 | 5 < ImgH < 20 | 9.070 | 9.129 |
| 53 | 5 < BFL < 20 | 15.153 | 12.489 |
| 54 | 5 < F < 20 | 10.000 | 10.000 |
| 55 | 100 < FOV | 130.000 | 130.000 |
| 56 | 1 < TTL / Vd1 < 7 | 3.089 | 2.450 |
| 57 | 10 < TTL / ImgH < 30 | 14.392 | 13.281 |
| 58 | 1 < BFL / ImgH < 3 | 1.671 | 1.368 |
| 59 | 6 < TTL / BFL < 15 | 8.615 | 9.708 |
| 60 | 0 < F / TTL < 0.5 | 0.077 | 0.082 |
| 61 | 0 < F / BFL < 2 | 0.660 | 0.801 |
| 62 | 0.5 < F / ImgH < 1.5 | 1.102 | 1.095 |
| 63 | 0.5 < F / EPD < 1.5 | 0.803 | 0.700 |
| 64 | 100 < TTL / F# < 250 | 162.660 | 173.210 |
| 65 | 100 < FOV / F# < 250 | 161.990 | 185.719 |
| 66 | 120 < (CT_Max+CG_Max)*n < 250 | 184.539 | 206.611 |
| 67 | 15 < TTL/n < 40 | 26.107 | 24.249 |
| 68 | 0.5 < FOV / TTL < 1.5 | 0.996 | 1.072 |

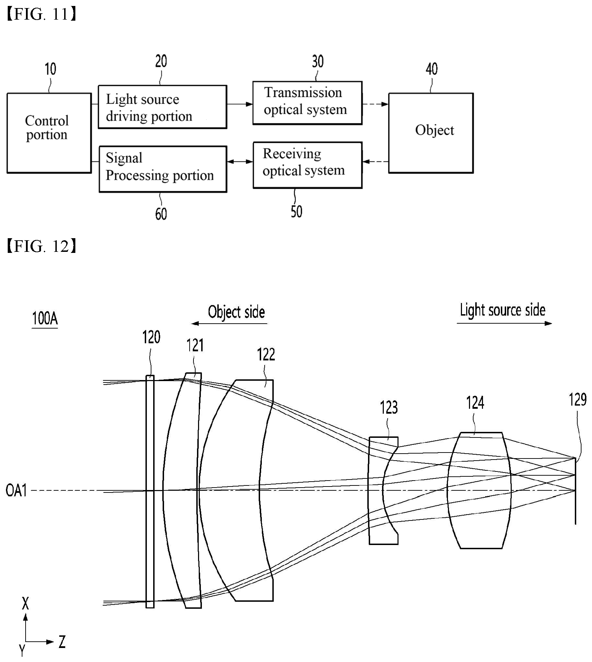

FIG. 11 is a block diagram of a sensor device having a receiving optical system according to an embodiment of the invention. Referring to FIG. 11, the sensor device includes a control portion 10, a light source driving portion 20, a transmission optical system 30, a receiving optical system 50 disclosed above, and a signal processing portion 60.

The control portion 10 controls the transmission and reception of signals, and can be linked to devices related to communication services such as autonomous driving modules, artificial intelligence modules, drones, robots, augmented reality devices, virtual reality devices, and 5G and 6G based on the transmitted/received signals. The light source driving portion 20 supplies power to a light source included in the transmission optical system 30 to drive it. The light source generates a laser beam in the form of a linear light source or a point light source. The light source driving portion 20 can adjust or vary the driving current supplied to the light source according to driving environment information. The driving environment information can include terrain information of a driving section, traffic congestion information, weather, etc. The wavelength of the laser beam generated from the light source may be in the range of 890 nm to 960 nm or in the range of 940 nm ±10 nm. As another example, the wavelength of the laser beam may be 1550 nm ±10 nm. The laser light source may be implemented as an InGaAs/GaAs-based semiconductor diode laser and may emit a high-power laser beam. The light source may include a single emitter and/or multiple emitters.

The transmitting optical system 30 transmits the laser beam generated from the light source to an object 40 through a lens portion and a diffuser, and the light reflected from the object 40 is received by the receiving optical system 50. The receiving optical system 50 may be composed of a plurality of optical sensors, and the optical sensor converts the received light into an electrical signal using a photodiode. That is, the sensing portion is arranged in a matrix type to convert light received from an object scanned in each of the horizontal and vertical directions into current. The signal processing portion 60 converts the output of the receiving optical system 50 into voltage, amplifies it, and then converts the amplified signal into a digital signal using an analog-to-digital converter. The signal processing portion 60 analyzes digital data using a TOF (Time of Flight) algorithm or a phase-shift algorithm to detect the distance to the object 40 and the shape of the object.

The control portion 10 can receive vehicle speed information and road condition information through a control unit (e.g., ECU) or a network. The control portion 10 can receive driving environment information through a network. The driving environment information can include terrain information of a driving section, traffic congestion information, weather, etc. The control portion 10 can adjust the gain based on one or more of the vehicle speed, the road surface condition of the road on which the vehicle is driving, and the driving environment information, and can provide sensor data including the distance to the object and the shape information of the object to the free-driving device.

FIG. 12 is a drawing showing a transmission optical system according to an embodiment of the invention.

Referring to FIG. 12, the transmission optical system 100A can include sixth to ninth lenses 121, 122, 123, and 124 and a diffuser 120 sequentially arranged from the object side toward the light source 129. The sixth to ninth lenses 121, 122, 123, and 124 irradiate light toward the subject, and the optical system having the first to fifth lenses of the receiving optical system 100 of FIG. 1 and FIG. 6 can receive the light reflected from the subject. For example, the number of lenses of the transmission optical system can be different from the number of lenses of the receiving optical system. The number of lenses of the transmission optical system may be 5 or less, for example, in the range of 3 to 5.

The diffuser 120 is disposed closest to the object, which is the subject, and may include a micro lens array on at least one or both of the incident side and the emission side surfaces. The aperture stop of the transmission optical system may be arranged around the periphery of the light source side surface of the diffuser 120. The aperture stop of the transmission optical system may be arranged at a position spaced apart from the sixth lens 121 in the object direction. The aperture stop of the transmission side may suppress an increase in the effective diameter of the sixth lens 121. The aperture stop of the transmission optical system 100A may be removed.

The sixth lens 121 may have positive (+) or negative (-) refractive power on the optical axis OA. The sixth lens 121 may have positive (+) refractive power. The sixth lens 121 may include a plastic material or a glass material, and may be, for example, a glass material. The sixth lens 121 made of a glass material may reduce changes in the center position and the radius of curvature due to temperature changes in the surrounding environment, and may protect the output side surface of the transmission optical system 100A. The object-side surface of the sixth lens 121 may be convex on the optical axis, and the light source side surface may be concave. The object-side surface and the light source side surface of the sixth lens 121 may have spherical surfaces. The sixth lens 121 may have a meniscus shape convex toward the object side.

The seventh lens 122 may be disposed between the sixth lens 121 and the eighth lens 123. The seventh lens 122 may have positive (+) or negative (-) refractive power in the optical axis OA. The seventh lens 122 may have negative (-) refractive power. The seventh lens 122 may include a plastic or glass material, and may be provided as a glass material, for example. The object-side surface of the seventh lens 112 may be convex with respect to the optical axis OA, and the sensor-side surface may be concave. Both the object-side surface and the light source-side surface may be spherical. The center distance between the seventh lens 122 and the eighth lens 123 may be the largest among the center distances of the lenses in the transmission optical system.

The eighth lens 123 may have positive (+) or negative (-) refractive power in the optical axis OA. The eighth lens 123 may have negative (-) refractive power. The eighth lens 123 may include a plastic or glass material, and may be provided as a glass material, for example. The object-side surface of the eighth lens 123 may be convex on the optical axis, and the light source-side surface may be concave. The eighth lens 123 may have a meniscus shape convex toward the object from the optical axis OA. At least one or both of the object-side surface and the light source-side surface of the eighth lens 123 may be spherical. The ninth lens 124 may have positive (+) or negative (-) refractive power with respect to the optical axis OA.

The ninth lens 124 may have positive (+) refractive power. The ninth lens 124 may include a plastic or glass material, and may be injection-molded with a glass material. The object-side surface of the ninth lens 124 may be convex with respect to the optical axis, and the light source-side surface may be convex. The ninth lens 124 may have a convex shape on both sides. The object-side surface and the light source-side surface of the ninth lens 124 may be aspherical. The effective diameter of the ninth lens 124 may be smaller than the effective diameters of the sixth and seventh lenses 121 and 122. The eighth lens 123 may have a higher refractive index than the refractive indices of the sixth and seventh lenses 121 and 122.

The ninth lens 124 may be an aspherical lens closest to the light source 129. Two or less aspherical lenses may be arranged adjacent to the light source 129. The light source 129 generates a wavelength of a laser beam, and the laser beam may be in a range of 800 nm to 1000 nm, preferably, in a range of 890 nm to 960 nm or 940 nm ±10 nm. The light source 129 can be implemented as a semiconductor diode laser based on InGaAs/GaAs and can emit a high-power laser beam. The light source 129 can include a single emitter and/or multiple emitters. The light source 129 generates a laser beam in the form of a line light source or a point light source.

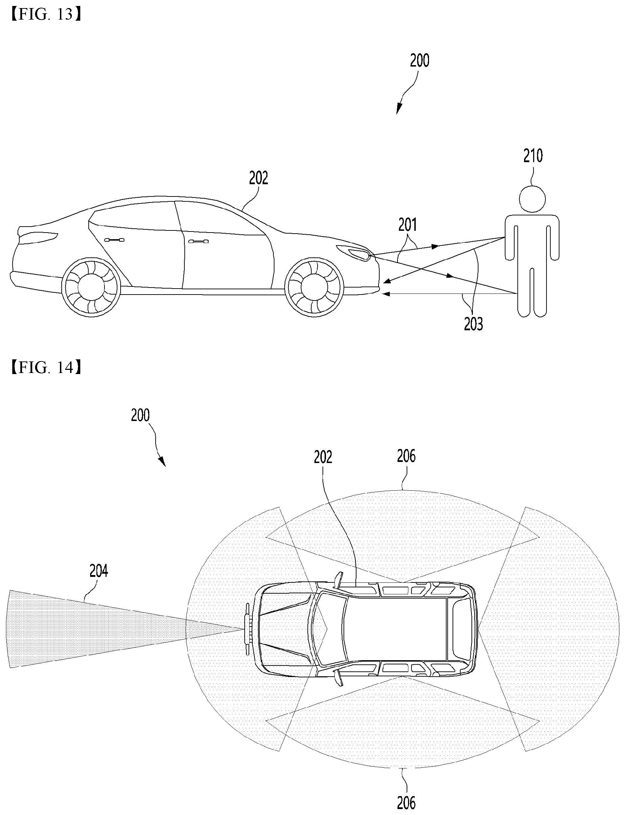

FIG. 13 is a drawing showing an example of measuring an object in a vehicle having a sensor system of the invention, and FIG. 14 is a drawing showing an example of surrounding surveillance in a vehicle having a sensor system of the invention.

Referring to FIGS. 13 and 14, a vehicle 202 having a sensor system includes a transmitting optical system that projects a laser beam 201 generated by a light source toward a target scene, and a receiving optical system that receives light 203 reflected from the target or subject 210. In addition, the sensor system includes a LIDAR system, which typically includes a controller that calculates distance information to the subject 210 from the reflected light, and a device that can scan or provide a specific pattern of light, which may be a static pattern within a desired range and FOV. The transmitting and receiving optical systems are used to convert the received signal light into a measurement value representing a point-by-point three-dimensional map of the surrounding environment within the range and FOV of the LIDAR system.

The receiving optical system and signal processing portion for the LIDAR calculate range information based on the time-of-flight measurements of the light pulses emitted from the light source. In addition, the target plane associated with the specific range is illuminated in the scene, and the known information about the light beam profile based on the specific design of the source and projector system is used to determine position information about the reflecting surface, thereby generating a complete x, y, z, or 3D picture of the scene. In other words, the point-by-point 3D map of the surrounding environment represents a collection of measurement data representing position information from all surfaces reflecting the light from the source to the receiver within the field of view of the LIDAR system. In this way, a 3D representation of the object in the field of view of the LIDAR system is obtained.

Also illustrated is a schematic diagram showing the 2D field of view and range requirements of a typical surround sensing LIDAR system 200 for a vehicle 202. For example, an adaptive cruise control function may require a field of view and range 204 with a narrow field of view compared to a "surround view" field of view and range 206, but with a long field range requirement. In general, the sensor capabilities of an automobile may be enabled by a combination of LIDAR, radar, cameras, and ultrasonic sensors. The combination of these sensor data to generate information about the surrounding environment is often referred to as "sensor fusion." While the present invention describes a LIDAR system in the context of an automobile, where LIDAR is widely used for autonomous or self-driving or driver-assisted vehicles, it should be understood that the embodiments may be applied to any vehicle. Other types of vehicles may include robots, tractors, trucks, airplanes, drones, boats, ships, etc.

Features, structures, effects, etc. described in the embodiments above are included in at least one embodiment of the invention, and are not necessarily limited to only one embodiment. Furthermore, the features, structures, and effects illustrated in each embodiment may be combined or modified with respect to other embodiments by those skilled in the art in the field to which the embodiments belong. Therefore, contents related to these combinations and variations should be construed as being included in the scope of the invention. Although described based on the embodiments, this is only an example, this invention is not limited, and it will be apparent to those skilled in the art that various modifications and applications not illustrated above are possible without departing from the essential characteristics of this embodiment. For example, each component specifically shown in the embodiment may be modified and implemented. And the differences related to these modifications and applications should be construed as being included in the scope of the invention as defined in the appended claims.

## Claims

1. An optical system comprising:
a first lens most adjacent to an object;
a last lens most adjacent to a sensing portion;
a plurality of lenses disposed between the first lens and the last lens and aligned with an optical axis; and
an optical filter disposed in one of regions between the plurality of lenses,
wherein a center distance between two lenses adjacent to an object side of the optical filter is greater than a center distance between two lenses adjacent to a sensor side of the optical filter,
wherein an optical axis distance from an object-side surface of the first lens to a surface of the sensing portion is TTL,
wherein 1/2 of a diagonal length of the sensing portion is ImgH, and
wherein the following equation satisfies: 10 < TTL / ImgH < 30.

2. The optical system of claim 1,
wherein an optical axis distance from a sensor-side surface of the optical filter to the surface of the sensing portion is D1,
wherein an optical axis distance from a sensor-side surface of the last lens to the surface of the sensing portion is BFL, and
wherein the following equation satisfies: 2 < D1/BFL < 6.

3. The optical system of claim 1,
wherein an optical axis distance from a sensor-side surface of the optical filter to the surface of the sensing portion is D1,
wherein an optical axis distance from an object-side surface of the optical filter to the object-side surface of the first lens is D2, and
wherein the following equation satisfies: D1 < D2.

4. The optical system of any one of claims 1 to 3, comprising:
a second lens and a third lens sequentially arranged on the optical filter from the first lens,
wherein a center distance between the second lens and the third lens is greater than a center distance between the first lens and the second lens.

5. The optical system of claim 4, comprising:
a fourth lens disposed between the optical filter and the last lens,
wherein a center distance between the third lens and the fourth lens is smaller than the center distance between the second lens and the third lens.

6. The optical system of any one of claims 1 to 3,
wherein at least two of the lenses in the optical system are aspherical lenses on the optical axis, and
wherein the lenses in the optical system are made of glass.

7. The optical system of any one of claims 1 to 3,
wherein the optical filter has a transmittance of 90% or more for some wavelengths within a range of 800 nm to 1000 nm, and
wherein the optical filter is disposed closer to a lens located on the object side of the optical filter than to a lens located on the sensor side of the optical filter.

8. The optical system of any one of claims 1 to 3,
wherein the object-side lens and the sensor-side lens disposed on both sides of the optical filter have a spherical shape on the optical axis.

9. The optical system of claim 8,
wherein a lens between the lens adjacent to the object side of the optical filter and the first lens is an aspherical lens made of glass.

10. The optical system of claim 9, wherein the last lens is an aspherical lens made of glass.

11. The optical system of any one of claims 1 to 3,
wherein the first lens has negative refractive power and has a meniscus shape convex toward the object, and
wherein the last lens has positive refractive power and has a biconvex shape.

12. The optical system of any one of claims 1 to 3,
wherein F number is 1 or less.

13. A receiving optical system comprising:
first to fifth lenses aligned along an optical axis from an object toward a sensing portion; and
an optical filter spaced apart from the sensing portion and disposed between the third lens and the fourth lens,
wherein the first lens has negative refractive power,
wherein at least two of the third to fifth lenses have positive refractive power,
wherein at least one lens between the first lens and the optical filter has an aspherical shape on an object-side surface and a sensor-side surface,
wherein the fifth lens has an aspherical shape on its optical axis,
wherein an optical axis distance between the second lens and the third lens is a largest among optical axis distances between adjacent lenses among the first to fifth lenses.

14. The receiving optical system of claim 13,
wherein the optical filter includes a band pass filter,
wherein an optical axis distance from the optical filter to a surface of the sensing portion is D1,
wherein a center thickness of the fifth lens is CT5, and
wherein the following equation satisfies: (CT5*3) < D1 < (CT5*5).

15. The receiving optical system of claim 13 or 14,
wherein the first lens includes a convex object-side surface and a concave sensor-side surface on the optical axis,
wherein the second lens includes a concave object-side surface and a concave sensor-side surface on the optical axis,
wherein the first to fifth lenses are made of glass,
wherein the first, third, and fourth lenses are lenses whose object-side surface and sensor-side surface are spherical.
